(19) Europäisches Patentamt
European Patent Office
Office européen des brevets

(11) Veröffentlichungsnummer: **0 307 817 A1**

(12) **EUROPÄISCHE PATENTANMELDUNG**

(21) Anmeldenummer: **88114758.1**

(22) Anmeldetag: **09.09.88**

(51) Int. Cl.[4]: **C09B 62/04 , C09B 62/503 , C07C 147/12**

(30) Priorität: **17.09.87 DE 3731202**

(43) Veröffentlichungstag der Anmeldung: **22.03.89 Patentblatt 89/12**

(84) Benannte Vertragsstaaten: **CH DE FR GB IT LI**

(71) Anmelder: **BASF Aktiengesellschaft**
**Carl-Bosch-Strasse 38**
**D-6700 Ludwigshafen(DE)**

(72) Erfinder: **Patsch, Manfred, Dr.**
**Fritz-Wendel-Strasse 4**
**D-6706 Wachenheim(DE)**
Erfinder: **Nahr, Uwe, Dr.**
**In den Pfuetzen 19**
**D-6701 Dannstadt-Schauernheim(DE)**
Erfinder: **Jessen, Joerg, L., Dr.**
**Maulbeerstueck 20**
**D-6720 Speyer(DE)**
Erfinder: **Pandi, Klaus, Dr.**
**Schumannstrasse 18**
**D-6700 Ludwigshafen(DE)**
Erfinder: **Wirsing, Friedrich, Dr.**
**Vergissmeinnichtweg 4**
**D-6720 Speyer(DE)**

(54) **Doppelankerreaktivfarbstoffe und Benzylsulfonylverbindungen als deren Zwischenprodukte.**

(57) Doppelankerreaktivfarbstoffe der Formel

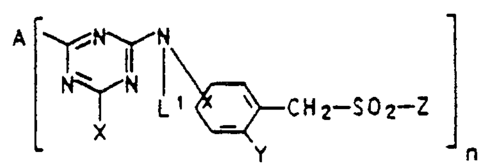

in der
n 1 oder 2
A den Rest eines gegebenenfalls metallisierten Azofarbstoffs, der eine oder zwei Imino- oder $C_1$-$C_4$-Alkyliminogruppen besitzt, an die der Triazinring gebunden ist,
L' Wasserstoff oder $C_1$-$C_4$-Alkyl,
X Halogen,
Y Wasserstoff, Chlor, Cyano, Carbamoyl, Carboxyl oder Hydroxysulfonyl und
Z Vinyl oder einen Rest der Formel $C_2H_4$-B bedeuten, in dem B für Chlor, $OSO_3H$, $SSO_3H$, $OP(O)(OH)_2$, $C_1$-$C_4$Alkylsulfonyloxy gegebenenfalls substituiertes Phenylsulfonyloxy, $C_1$-$C_4$-Alkanoyloxy, $C_1$-$C_4$-Dialkylamino,

EP 0 307 817 A1

Xerox Copy Centre

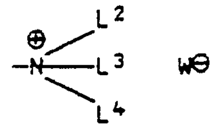 , 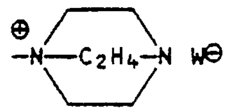 , 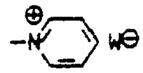 oder 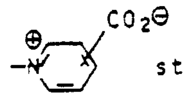 steht,

wobei $L^2$, $L^3$ und $L^4$ gleich oder verschieden sind und jeweils unabhängig voneinander die Bedeutung von $C_1$-$C_4$-Alkyl oder Benzyl und $W^{\ominus}$ jeweils die Bedeutung eines Anions besitzen, mit der Maßgabe, daß Y nicht für Wasserstoff steht, wenn A den metallfreien Rest eines Disazofarbstoffs bedeutet, der 1-Amino-8-hydroxynaphthalin-3,6- oder -4,6-disulfonsäure als Kupplungskomponente aufweist, sowie Benzylsulfonylverbindungen der Formel

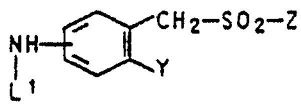

in der
$L^1$, Y und Z die obengenannte Bedeutung besitzen.

## Doppelankerreaktivfarbstoffe und Benzylsulfonylverbindungen als deren Zwischenprodukte

Die vorliegende Erfindung betrifft neue Doppelankerreaktivfarbstoffe, die sich von gegebenenfalls metallisierten Azofarbstoffen ableiten und ein Doppelankersystem auf Basis eines Triazin/(Sulfonylmethyl)-anilinderivats aufweisen, sowie neue Benzylsulfonylverbindungen, die als Zwischenprodukte dieser Farbstoffe dienen.

Aus der EP-B-48 355 und EP-B-65 732 sind Doppelankerreaktivfarbstoffe bekannt, die sich von Azofarbstoffen mit 1-Amino-8-hydroxynaphthalin-3,6-oder 4,6-disulfonsäure als Kupplungskomponente ableiten und die Ankerkomponenten auf Basis von Fluor-oder Chlortriazin und kernunsubstituiertem (Sulfonylmethyl)anilin aufweisen.

Aufgabe der vorliegenden Erfindung war es, neue Doppelankerreaktivefarbstoffe mit vorteilhaften anwendungstechnischen Eigenschaften bereitzustellen.

Es wurden nun neue Doppelankerreaktivfarbstoffe der Formel I

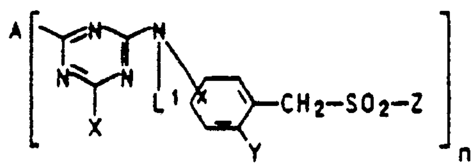 (I),

gefunden, in der

n 1 oder 2

A den Rest eines gegebenenfalls metallisierten Azofarbstoffs, der eine oder zwei Imino- oder $C_1$-$C_4$-Alkyliminogruppen besitzt, an die der Triazinring gebunden ist,

$L^1$ Wasserstoff oder $C_1$-$C_4$-Alkyl,

X Halogen

Y Wasserstoff, Chlor, Cyano, Carbamoyl, Carboxyl oder Hydroxysulfonyl und

Z Vinyl oder einen Rest der Formel $C_2H_4$-B bedeuten, in dem B für Chlor, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino,

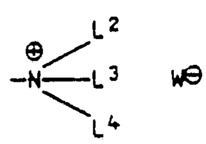 , 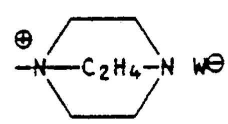 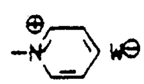 oder 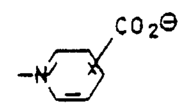 steht,

wobei $L^2$, $L^3$ und $L^4$ gleich oder verschieden sind und jeweils unabhängig voneinander die Bedeutung von $C_1$-$C_4$-Alkyl oder Benzyl und $W^{\ominus}$ jeweils die Bedeutung eines Anions besitzen, mit der Maßgabe, daß Y nicht für Wasserstoff steht, wenn A den Rest eines Disazofarbstoffs bedeutet, der 1-Amino-8-hydroxynaphthalin-3,6- oder 4,6-disulfonsäure als Kupplungskomponente aufweist.

Alle in der obengenannten Formel I auftretenden Alkylreste können sowohl geradkettig als auch verzweigt sein.

Für den Fall, daß in der obengenannten Formel I substituierte Phenylreste auftreten, kommen, sofern nicht anders vermerkt, als Substituenten z.B. $C_1$-$C_4$-Alkyl, $C_1$-$C_4$-Alkoxy oder Halogen in Betracht.

$L^1$, $L^2$, $L^3$ und $L^4$ in Formel I stehen beispielsweise für Methyl, Ethyl, Propyl, Isopropyl, Butyl, Isobutyl oder sec-Butyl.

X in Formel I steht beispielsweise für Fluor, Chlor oder Brom, insbesondere für Fluor oder Chlor.

Z in Formel I steht beispielsweise für Vinyl, 2-Chlorethyl, $C_2H_4OSO_3H$, $C_2H_4SSO_3H$, $C_2H_4OP(O)(OH)_2$, 2-(Methylsulfonyloxy)ethyl, 2-(Ethylsulfonyloxy)ethyl, 2-(Propylsulfonyloxy)ethyl, 2-Isopropylsulfonyloxy)-ethyl, 2-(Butylsulfonyloxy)ethyl, 2-(Phenylsulfonyloxy)ethyl, dessen Phenylrest z.B. durch $C_1$-$C_4$-Alkyl, $C_1$-$C_4$-Alkoxy oder Halogen substituiert sein kann, 2-(Dimethylamino)ethyl, 2-(Diethylamino)ethyl, 2-(Dipropylamino)ethyl, 2-(Diisopropylamino)ethyl, 2-(Dibutylamino)ethyl oder 2-(N-Methyl-N-ethylamino)ethyl.

Z steht weiterhin beispielsweise für 2-(Trimethylammonium)ethyl, 2-(Triethylammonium)ethyl, 2-(Methyldiethylammonium)ethyl, 2-(Tripropylammonium)ethyl, 2-(Methyl-dipropylammonium)ethyl, 2-(Tributylammonium)ethyl, 2-(Benzyl-dimethylammonium)ethyl, 2-(Benzyl-diethylammonium)ethyl, 2-Pyridiniumethyl oder 2-(2-, 3- oder 4-Carboxylatopyridinium)ethyl, wobei (mit Ausnahme des 2-(2-, 3- oder 4-Carboxylatropyridinium)ethyl-Rests, der als Betain vorliegt) als Anion $W^{\ominus}$ z.B. Fluorid, Chlorid, Bromid, Iodid, Mono-, Di oder Trichloracetat, Methylsulfonat, Phenylsulfonat oder 2- oder 4-Methylphenylsulfonat in Betracht kommt.

A in Formel I stellt z.B. einen gegebenenfalls metallisierten Rest eines Azofarbstoffs dar, der eine oder zwei Imino- oder $C_1$-$C_4$-Alkyliminogruppen besitzt, an die der Triazinring gebunden ist. Geeignete Azofarbstoffreste, bzw. die den Doppelankerreaktivfarbstoffen der Formel I zugrundeliegenden aminogruppenhaltigen Azofarbstoffe sind an sich bekannt und in großer Zahl beschrieben, z. B. in Venkataraman "The Chemistry of Synthetic Dyes", Band 6, Seiten 213 bis 297, Academic Press, New York, London, 1972. Die Azofarbstoffe, die eine oder zwei Amino- oder $C_1$-$C_4$-Monoalkylaminogruppen aufweisen, an die der neue Doppelankder gebunden wird, gehorchen der Formel (III)(

$$D\text{-}N = N\text{-}K\,(\text{-}N=N\text{-}D)_l \qquad \text{(III)},$$

in der D den Rest einer Diazokomponente, K den Rest einer Kupplungskomponente und l 0 oder 1 bedeuten.

Der faserreaktive Doppelankerrest der Formel IV

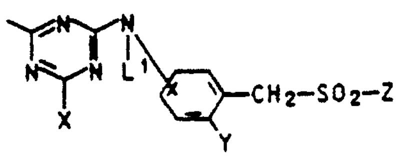

(IV),

in dem $L^1$, X, Y und Z jeweils die obengenannte Bedeutung besitzen und der im folgenden als E bezeichnet wird, ist dabei über den Triazinring an eine Imino- oder $C_1$-$C_4$-Alkyliminogruppe gebunden, die sich am Rest D der Diazokomponente(n) und/oder am Rest K der Kupplungskomponente befindet.

Bevorzugt sind Doppelankerreaktivfarbstoffe der Formel I, in der Y Chlor, Cyano, Carbamoyl, Carboxyl oder Hydroxysulfonyl und Z den Rest $C_2H_4OSO_3H$ bedeuten. Sie weisen als faserreaktiven Doppelankerrest also den Rest E' der Formel IV a auf

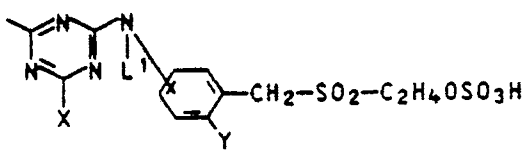

(IV a)

in der X und $L^1$ jeweils die obengenannte Bedeutung besitzt und Y für Chlor, Cyano, Carbamoyl, Carboxyl oder Hydroxysulfonyl steht.

Wertvolle Farbstoffe sind z.B. wasserlösliche Azofarbstoffe, insbesondere Monoazofarbstoffe, der Formel (III) (l = 0), die Sulfonsäure- und/oder Carboxylgruppen aufweisen können.

Bevorzugt sind nichtmetallisierte Azofarbstoffe, insbesondere solche, die Sulfonsäure- und/oder Carboxylgruppen enthalten, wobei jene, die 1 bis 6 Sulfonsäuregruppen ausweisen, besonders hervorzuheben sind.

Wichtige Azofarbstoffe sind beispielsweise solche der Benzol-azo-naphthalin-, Benzol-azo-1-phenylpyrazol-5-on-, Benzol-azo-benzol-, Naphthalin-azo-benzol-, Benzol-azo-aminonaphthalin-, Naphthalin-azo-naphthalin-, Naphthalin-azo-1-phenylpyrazol-5-on-, Benzol-azo-pyridon, Benzol-azo-aminopyridin, Naphthalin-azo-pyridon-, Naphthalin-azo-aminopyridin oder Stilben-azo-benzolreihe.

Besonders bevorzugt sind Doppelankerreaktivfarbstoffe der Formel V

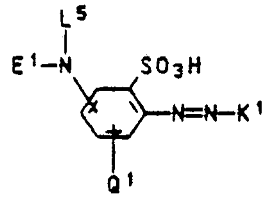

(V),

in der $E^1$ die obengenannte Bedeutung besitzt, $L^5$ für Wasserstoff oder $C_1$-$C_4$-Alkyl, $Q^1$ für Wasserstoff, $C_1$-$C_4$-Alkyl, Chlor, oder Hydroxysulfonyl, und $K^1$ für den Rest einer Kupplungskomponenten der Naphthalin-, Pyrazolon-, Pyridon- oder Hydroxypyrimidinreihe, der gegebenenfalls eine weitere faserreaktive Gruppe aufweist, stehen.

Weiterhin besonders bevorzugt sind Doppelankerreaktivfarbstoffe der Formel VI

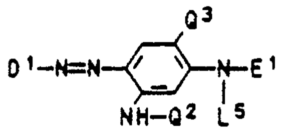

(VI),

in der $E^1$ und $L^5$ jeweils die obengenannte Bedeutung besitzen, $Q^2$ für $C_1$-$C_4$-Alkanoyl, Carbamoyl, $C_1$-$C_4$-Mono- oder Dialkylcarbamoyl, Phenylcarbamoyl oder Cyclohexylcarbamoyl, $Q^3$ für Wasserstoff, $C_1$-$C_4$-Alkyl, $C_1$-$C_4$-Alkoxy, Hydroxysulfonyl oder Chlor und $D^1$ für den Rest einer Diazokomponente der Anilin- oder Naphthalinreihe, die keine weitere faserreaktive Gruppe trägt, stehen.

Weiterhin besonders bevorzugt sind Doppelankerreaktivfarbstoffe der Formel VII

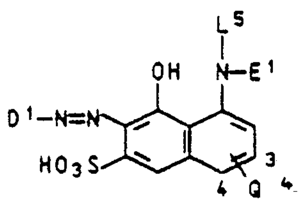

(VII),

in der $D^1$, $E^1$ und $L^5$ jeweils die obengenannte Bedeutung besitzen und $Q^4$ für Hydroxysulfonyl in Ringposition 3 oder 4 steht.

Weiterhin besonders bevorzugt sind Doppelankerreaktivfarbstoffe der Formel VIII

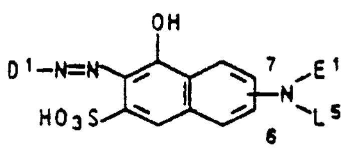

(VIII),

in der $D^1$, $E^1$ und $L^5$ jeweils die obengenannte Bedeutung besitzen und wobei die Gruppe $-NE^1L^5$ in Ringposition 6 oder 7 steht.

Weiterhin sind wertvolle Verbindungen solche der Formel IX

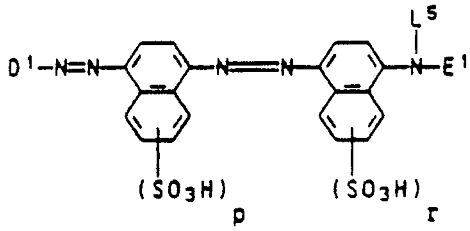

(IX),

in der $L^5$, $D^1$ und $E^1$ jeweils die obengenannte Bedeutung besitzen und p und r für 0,1 oder 2 stehen.

Neben dem Doppelankersystem E können die Farbstoffreste A noch weitere faserreaktive Reste tragen, z. B. auf Triazin-, Pyrimidin- oder Vinylsulfonylbasis.

Aromatische Reste D der Diazokomponenten der Anilin- und Aminonaphthalinreihe, die keine faserreaktiven Gruppen tragen, leiten sich beispielsweise von Aminen der Formel X a-f

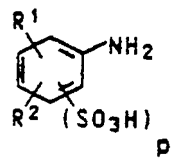,
(X a)

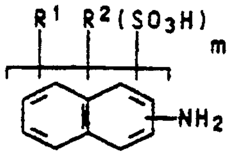,
(X b)

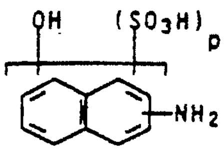,
(X c)

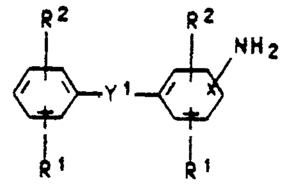,
(X d)

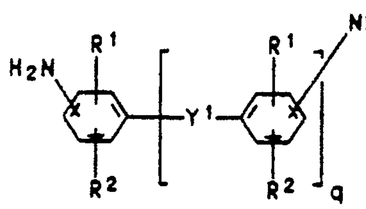.
(X e)

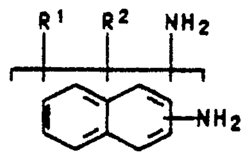
(X f)

ab, wobei

m 0, 1, 2 oder 3,

P 0, 1 oder 2

q 0 oder 1,

$R^1$ Wasserstoff, Methyl, Ethyl Methoxy, Ethoxy, Acetyl, Cyano, Carboxyl, Hydroxysulfonyl, $C_1$-$C_4$-Alkoxycarbonyl, Hydroxy, Carbamoyl, $C_1$-$C_4$-Mono-oder Dialkylcarbamoyl, Fluor, Chlor, Brom oder Trifluormethyl,

$R^2$ Wasserstoff, Methyl, Ethyl, Methoxy, Ethoxy, Cyano, Carboxyl, Hydroxysulfonyl, Acetylamino, $C_1$-$C_4$-Alkoxycarbonyl, Carbamoyl, $C_1$-$C_4$-Mono- oder Dialkylcarbamoyl, Fluor, Chlor, Nitro, Sulfamoyl, $C_1$-$C_4$-Mono- oder Dialkylsulfamoyl, $C_1$-$C_4$-Alkylsulfonyl, Phenylsulfonyl oder Phenoxy und

$Y^1$ eine direkte Bindung, Sauerstoff, Schwefel oder die Gruppe -NHCO-, -CONH-, -CO-, $-NHSO_2-$, $-SO_2-NH-$, $-SO_2-$, -CH=CH-, $-CH_2-CH_2-$, $-CH_2-$, -NH-, oder -N=N- bedeuten.

Bevorzugt sind solche Komponenten, in denen $R^1$ Wasserstoff, Methyl, Methoxy, Carboxyl, Hydroxysulfonyl, Hydroxy oder Chlor, $R^2$ Wasserstoff, Methyl, Methoxy, Carboxyl, Hydroxysulfonyl, Acetylamino oder Chlor und $Y^1$ die Gruppe -CO-, $-SO_2-$, -CH=CH-, $-CH_2-CH_2-$, $-CH_2-$oder -N=N- bedeuten.

Aromatische Amine die sich als Diazokomponenten eignen und die der Formel X a, X b, X c oder X d entsprechen, sind beispielsweise Anilin, 2-Methoxyanilin, 2-Methylanilin, 4-Chlor-2-aminoanisol, ] 4-Methylanilin, 4-Methoxyanilin, 2-Methoxy-5-methylanilin, 2,5-Dimethoxyanilin, 2,5-Dimethylanilin, 2,4-Dimethylanilin, 4-Butylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-(p-Tolylsulfonyl)anilin, 2-Ethoxy-1-naphthylamin, 1-Naphthylamin, 2-Naphthylamin, 4-Benzoylamino-2-ethoxyanilin, 4-Methylsulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-ulfonsäure, 2-Chloranilin-5-sulfonsäure, 2-Bromanilin-4-sulfonsäure, 2,6-Dichloranilin-4-sulfonsäure, 2,6-Dimethylanilin-3-, oder -4-sulfonsäure, 3-Acetylamino-6-sulfonsäure, 4-Acetylamino-2-hydroxysulfonyl-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Napththylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 1-Hydroxy-2-aminonaphthalin-5,8-oder -4,6-disulfonsäure, 4-Amino-diphenylamin, 4-Amino-4′-methoxydiphenyl amin, 4-Amino-4′-methoxy-diphenylamin-3-sulfonsäure, 4-(2′-Methylphenylazo)-2-methylanilin, 4-Aminoazobenzol, 4′-Nitrophenylazo-1-aminonaphthalin, 4-(6′-Hydroxy-sulfonylnapthylazo)-1-aminonaphthalin, 4-(2′, 5′-Dihydroxy-sulfonylphenylazo)-1-aminonaphthalin, 4′-Amino-3′-methyl-3-nitrobenzophenon, 4-Aminobenzophenon, 4-(4′-Aminophenyl azo)benzolsulfon-säure, 4-(4′-Amino-3′-methoxyphenylazo)-benzolsulfonsäure oder 2-Ethoxy-1-naphthylamin-6-sulfonsäure.

Aromatische Diamine, die sich als Tetrazokomponenten eignen und die der Formel X e oder X f entsprechen, sind beispielsweise 1,3-Diaminobenzol, 1,3-Diaminobenzol-4-sulfonsäure, 1,4-Diaminobenzol, 1,4-Diaminobenzol-2-sulfonsäure, 1,4-Diamino-2-methylbenzol, 1,4-Diamino-2-methoxybenzol, 1,3-Diamino-4-methylbenzol, 1,3-Diaminobenzol-5-sulfonsäure, 1,3-Diamino-5-methylbenzol, 1,6-Diaminonaphthalin-4-sulfonsäure, 2,6-Diaminonaphthalin-4,8-disulfonsäure, 3,3′-Diaminodiphenylsulfon, 4,4′-Diaminodiphenylsulfon, 4,4′-Diaminostilben-2,2′-disulfonsäure, 2,2′-Diaminodiphenylsulfon, 2,2′-Diaminodiphenylsulfon-4,5-disulfonsäure, 4,4′-Diaminobenzophenon, 4,4′-Diamino-3,3′-dinitrobenzophenon, 3,3′-Diamino-4,4′-dichlorbenzophenon, 4,4′- oder 3,3′-Diaminodiphenyl, 4,4′-Diamino-3,3′-dichlordiphenyl, 4,4′-Diamino-3,3′-dimethoxy- oder -3,3′-dimethyl- oder -2,2′-dimethyl- oder -2,2′-dichlor- oder -3,3′-diethoxydiphenyl, 4,4′-Diamino-3,3′-dimethyl-6,6′-dinitrodiphenyl, 4,4′-Diaminodiphenyl-2,2′- oder -3,3′-disulfonsäure, 4,4′-Diamino-3,3′-dimethyl- oder -3,3′-dimethoxy oder -2,2′-dimethoxydiphenyl-6,6′-disulfonsäure, 4,4′-Diamino-2,2′, 5,5′-tetrachlordiphenyl, 4,4′-Diamino-3,3′-dinitrodi-phenyl, 4,4′-Diamino-2,2′-dichlor-5,5′-dimethoxydiphenyl, 4,4′-Diaminodiphenyl-2,2′- oder -3,3′-dicarbonsäure, 4,4′-Diamino-3,3′-dimethyldiphenyl-5,5′-disulfonsäure, 4,4′-Diamino-2-nitrodiphenyl, 4,4′-Diamino-3-ethoxy- oder -3-hydroxysulfonyldiphenyl, 4,4′-Diamino-3,3′-dimethyldiphenyl-5-sulfonsäure, 4-4′-Diaminodiphenylmethan, 4,4′-Diamino-3,3′-dimethyldiphenylmethan, 4,4′-Diamino-2,2′, 3,3′-tetramethyldiphenylmethan, 4,4′-Diaminodiphenylethan, 4,4′-Diaminostilben oder 4 ,4′-Diaminodiphenylmethan-3,3′-Dicarbonsäure

Aromatische Reste D der Diazokomponenten der Anilin- oder Aminonaphthalinreihe, die einen faserreaktiven Rest E tragen können, leiten sich beispielsweise von Aminen der Formel XI a - c

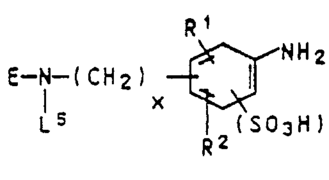

(XI a)

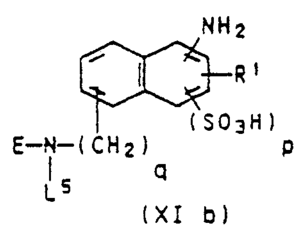

(XI b)

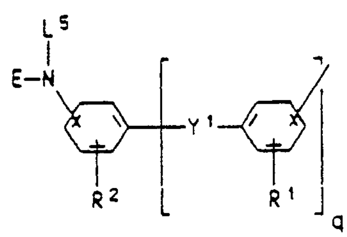

(XI c)

ab, in denen $L^5$, $R^1$, $R^2$, p, y, Y' und E jeweils die obengenannte Bedeutung besitzen.

Aromatische Amine, die der Formel XI a, XI b oder XI c entsprechen, sind beispielsweise 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methylbenzol , 1,4-Diamino-2-methoxybenzol, 1,3-Diamino-4-methylbenzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diaminonapht-2-ol-4-sulfonsäure, 1,6-Diaminonaphthalin-4-sulfonsäure, 2,6-Diaminonaphthalin-4,8-disulfonsäure, 2,6-Diaminonapht-1-ol-4,8-disulfonsäure, 1,3-Diaminobenzol-5-sulfonsäure, 1,3-Diamono-5-methylbenzol, 2,6-Diaminophenol-4-sulfonsäure, 5-(Aminomethyl)-2-aminonaphthalin-1-sulfonsäure, 5-(N-Methylaminomethyl)-2-aminonaphthalin-1-sulfonsäure, 4,4′-Diaminostilben-3,3-dicarbonsäure, 4-(N-Methylaminomethyl)anilin-2-sulfonsäure oder 3-(N-Methylaminomethyl)anilin-6-sulfonsäure.

Die Reste K der Kupplungskomponente entstammen vorzugsweise der Anilin-, Naphthalin-, Pyrazol-, Pyridin, Pyrimidin-, Indol- oder Acylacetarylidreihe und können auch faserreaktive Gruppen tragen.

Faserreaktivegruppenfreie Kupplungskomponenten der Anilin- und Naphthalinreihe entsprechen beispielsweise den Verbindungen der Formel XII a - g

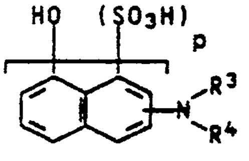 , 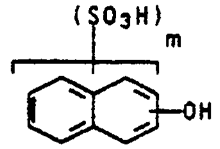 , 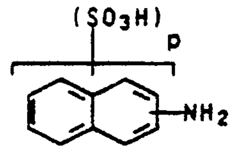 , 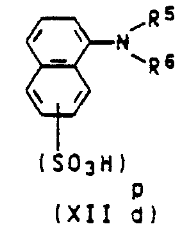 ,

(XII a) (XII b) (XII c) (XII d)

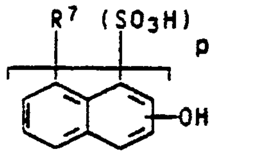 , 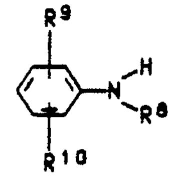 oder 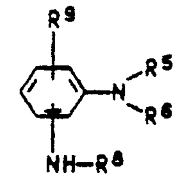 ,

(XII e) (XII f) (XII g)

wobei

$R^3$ Wasserstoff oder $C_1$-$C_4$-Alkyl,

$R^4$ Wasserstoff, $C_1$-$C_4$-Alkyl oder Phenyl, das durch $C_1$-$C_4$-Alkyl, $C_1$-$C_4$-Alkoxy, Chlor, Brom oder Hydroxysulfonyl ein- oder zweifach substituiert sein kann,

$R^5$ Wasserstoff oder $C_1$-$C_4$-Alkyl, das durch Hydroxy, Cyano, Carboxyl, Hydroxysulfonyl, Hydroxysulfonyloxy, Methoxycarbonyl, Ethoxycarbonyl oder Acetoxy substituiert sein kann,

$R^6$ Wasserstoff, $C_1$-$C_4$-Alkyl, das durch Hydroxy, Cyano, Carboxyl, Hydroxysulfonyl, Hydroxysulfonyloxy, Methoxycarbonyl, Ethoxycarobnyl oder Acetoxy substituiert sein kann, Benzyl oder Phenyl, das durch $C_1$-$C_4$-Alkyl, $C_1$-$C_4$-Alkoxy, Chlor oder Hydroxysulfonyl substituiert sein kann,

$R^7$ $C_1$-$C_6$-Alkylureido, Phenylureido, das durch Chlor, Methyl, Methoxy, Nitro, Hydroxysulfonyl oder Carboxyl substituiert sein kann, $C_1$-$C_6$-Alkanoylamino, Cyclohexanoylamino Benzoylamino, das durch Chlor, Methyl, Methoxy, Nitro, Hydroxylsulfonyl oder Carboxyl substituiert sein kann, oder Hydroxy,

$R^8$ Wasserstoff, $C_1$-$C_6$-Alkyl, insbesondere $C_1$-$C_4$-Alkyl, das jeweils durch Phenyl, $C_1$-$C_4$-Alkoxy, Hydroxy, Phenoxy oder $C_1$-$C_4$-Alkanoyloxy substituiert sein kann, $C_5$-$C_7$-Cycloalkyl, Hydroxysulfonylphenyl, $C_1$-$C_4$-Alkanoyl, Carbamoyl, $C_1$-$C_4$-Mono- oder Dialkylcarbamoyl, Phenylcarbamoyl oder Cyclohexylcarbamoyl,

$R^9$ Methoxy, Ethoxy, Chlor, Brom, Acetylamino, Amino, Ureido, Methylsulfonylamino, Ethylsulfonylamino, Dimethylaminosulfonylamino, Methylamino, Ethylamino, Dimethylamino oder Diethylamino und

$R^{10}$ Wasserstoff, Methyl, Ethyl, Methoxy, Ethoxy, Chlor oder Brom bedeuten und

P und m jeweils die obengenannte Bedeutung besitzen.

Im einzelnen sind beispielsweise Anilin-N-methansulfonat, o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-(2-Hydroxyethyl)anilin oder N-(2-Hydroxyethyl)-m-toluidin zu nennen.

Naphtholsulfonsäuren sind beispielsweise 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Napthol-3,6-disulfonsäure, 2-Naphthol-6,8-disulfonsäure, 2-Napthol-3,6,8-trisulfonsäure, 1,8-Dihydroxynaphthalin-3,6-disulfonsäure, 2,6-Dihydroxynaphthalin-8-sulfonsäure, oder 2,8-Dihydroxynaphthalin-6-sulfonsäure.

Weiterhin sind beispielsweise 1-Naphthylamin, N-phenyl-1-napthylamin, N-Ethyl-1-naphthylamin, N-Phenyl-2-naphthylamin, 1,5-Naphthylendiamin, 1,8-Naphthylendiamin, 1-Naphthol, 2-Naphthol, 1,5-Dihydroxynaphthalin, 1,6-Dihydroxynaphthalin, 1,7-Dihydroxynaphthalin, 2,7-Dihydroxynaphthalin, 2-Hydroxynaphthalin-3-carbonsäure-N-phenylamid, 2-Hydroxynaphthalin-3-carbonsäure-N-(2′-methoxyphenyl)-amid oder 2-Hydroxynaphthalin-3-carbonsäure-N-(2′,5′-dimethoxyphenyl)amid zu nennen.

Aminonaphthalinsulfonsäuren sind beispielsweise 1-Naphthylamin-6-sulfonsäure, 1-Naphthylamin-7-sulfonsäure, 1-Naphthylamin-8-sulfonsäure, 2-Naphthylamin-3,6-disulfonsäure, 2-Naphthylamin-5,7-disulfonsäure oder 2-Naphthylamin-6,8-disulfonsäure.

Als Aminonaphtholsulfonsäuren sind z. B. 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfinsäure, 2-Amino-5-hydroxynaphthalin-1,7-disulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Methylamino-8-hydroxynaphthalin-6-sulfonsäure oder 2-(3′-oder 4′-Hydroxysulfonylphenyl)amino-8-hydroxynaphthalin-6-sulfonsäure zu nennen.

Von besonderer Bedeutung sind Kupplungskomponenten, die Sulfonsäuren-und/oder Carboxylgruppen aufweisen und gegebenenfalls noch Azogruppen enthalten, und die in ortho- oder para-Stellung zu einer Hydroxy- und/oder Aminogruppen kuppeln.

Als Beispiele für solche Kupplungskomponenten seien 2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure genannt.

Kupplungskomponenten der weiteren Reihen sind beispielsweise Pyrazolone Aminopyrazole, 2,6-Diaminopyridine, Pyridone, Hydroxy- oder Aminopyrimidine, Indole oder Acetoacetarylide.

Faserreaktivgruppenfreie Kupplungskomponenten dieser Reihe entsprechen dabei beispielsweise der Formel XIII a - f.

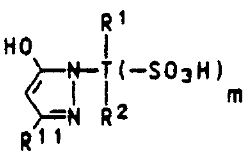 ,

(XIII a)

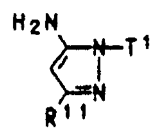 ,

(XIII b)

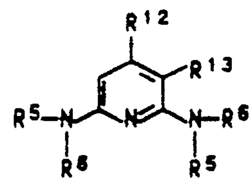 ,

(XIII c)

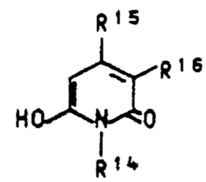 ,

(XIII d)

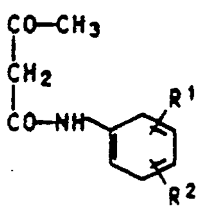 ,

(XIII e)

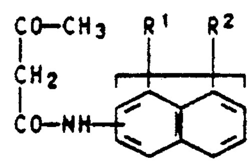 ,

(XIII f)

wobei

T für einen Benzol- oder Naphthalinkern,

T′ für $C_1$-$C_4$-Alkyl, Cyclohexyl, Benzyl oder Phenyl, das ein- oder mehrfach durch Fluor, Chlor, Brom, Methyl, Methoxy, Nitro, Hydroxysulfonyl, Carboxyl, Acetyl, Acetylamino, Methylsulfonyl, Sulfamoyl oder Carbamoyl substituiert ist,

$R^{11}$ für Methyl, Carboxyl, Methoxycarbonyl, Ethoxycarbonyl oder Phenyl,

$R^{12}$ für Wasserstoff oder $C_1$-$C_4$-Alkyl, das durch Methoxy, Ethoxy oder Cyano substituiert sein kann,

$R^{13}$ für Wasserstoff, Methyl, Hydroxysulfonylmethyl, Hydroxysulfonyl, Cyano oder Carbamoyl,

$R^{14}$ für Wasserstoff, $C_1$-$C_4$-Alkyl, das durch Phenyl, Hydroxysulfonylphenyl, Hydroxy, Amino, Methoxy, Ethoxy, Carboxyl, Hydroxysulfonylphenyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, $C_1$-$C_4$-Alkyl, Acetyl oder

Benzoyl substituiert ist,

$R^{15}$ für $C_1$-$C_4$-Alkyl, Phenyl, Hydroxy, Cyano, Acetyl, Benzoyl, Carboxyl, Methoxycarbonyl, Carbamoyl oder Hydroxysulfonylmethyl und

$R^{15}$ für Wasserstoff, Chlor, Brom, Acetylamino, Amino, Nitro, Hydroxysulfonyl, Sulfamoyl, Methylsulfonyl, Phenylsulfonyl, Carboxyl, Methoxycarbonyl, Acetyl, Benzoyl, Carbamoyl, Cyano oder Hydroxysulfonylmethyl stehen und $R^1$, $R^2$, $R^5$, $R^6$ und m jeweils die obengenannte Bedeutung besitzen.

Als Pyrazolon-Kupplungskomponenten sind beispielsweise 3-Methyl-, 3-Carboxy- oder 3-($C_1$-$C_4$-Alkoxycarbonyl)pyrazol-5-one zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Benzoyl, Acetyl, Acetylamino, Nitro, Hydroxyl, Carboxyl, Carbamoyl oder Sulfamoyl substituiertes Phenyl oder durch Hydroxysulfonyl substituiertes 1-, oder 3-Naphthyl tragen können. Beispielsweise sind 1-Phenyl-, 1-(2′-Chlorphenyl)-, 2-(2′-Methoxyphenyl)-, 1-(2′Methylphenyl)-, 1-(1′,5′-Dichlorphenyl)-, 1-(2′,6′-Dichlorphenyl)-, 1-(2′-Methyl-6′-chlorphenyl)-, 1-(2′-Methoxy-5′-methylphenyl)-, 1-(2′-Chlor-5′-hydroxysulfonylphenyl)-, 1-(2′-Methoxy-5′-hydroxysulfonylphenyl)-, 1-(2′-,5′-Dichlor-4′-hydroxysulfonylphenyl)-, 1-(2′,5′-Dihydroxysulfonylphenyl)-, 1-(2′-Carboxyphenyl)-, 1-(3′-Hydroxysulfonylphenyl)-, 1-(4′-Hydroxysulfonylphenyl)- oder 1-(3′-Sulfamoylphenyl)-3-carboxylpyrazol-5-on, 1-(3′- oder 4′-Hydroxysulfonylphenyl)-, 1-(2′-Chlorphenyl)-, 1-(2′-Chlor-4′- oder -5′-hydroxysulfonylphenyl)-, 1-(2′-Methyl-4′-hydroxysulfonylphenyl)-, 1-(2′,5′-Dichlorphenyl)-, 1-(4′,8′-Dihydroxysulfonyl-8-naphthyl)-, 1-(6′-Hydroxysulfonyl-1-naphthyl)-3-methylpyrazol-5-on, 1-Phenylpyrazol-5-on-3-carbonsäureethylester, Pyrazol-5-on-3-carbonsäureethylester oder Pyrazol-5-on-3-carbonsäure zu nennen.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4′-Chlorphenyl)-, 1-(4′-Methylphenyl)-5-aminopyrazol oder 1-Phenyl-3-methyl-5-aminopyrazol.

Acetoacetanilide sind vor allem Acetessiganilid und dessen im Phenylkern durch Chlor, Methyl, Ethyl, Methoxy, Ethoxy, Acetylamino, Hydroxysulfonyl, Carboxyl, Carbamoyl oder Sulfamoyl ein- oder mehrfach substituierte Derivate.

Vom Pyridin abgeleitete Kupplungskomponenten sind beispielsweise die in der DE-A-2 260 827 beschriebenen Derivate.

Als Pyrimidinkupplungskomponenten sind z. B. die in der DE-A-2 202 820, DE-A-2 308 663 und DE-A-3 119 349 aufgeführten Verbindungen geeignet. Weiterhin sind Barbitursäure und deren N-Substitutionsprodukte zu nennen. Als N-Substituenten kommen dabei insbesondere $C_1$-$C_4$-Alkyl oder gegebenenfalls substituiertes Phenyl in Betracht.

Als Indolkupplungskomponenten sind beispielsweise 2-Methylindol, 2-Phenylindol, 2-Phenylindol-5-sulfonsäure, 1-Methyl-2-phenylindol, 1-(2′-Hydroxyethyl)-, 1-(2′-Carboxyethyl)-, 1-(2′Carbamoylethyl)-2-methylindol oder -2-phenylindol zu nennen.

Als Pyridonkupplungskomponenten sind beispielsweise 1-Ethyl-2-hydroxy-4-methyl-5-carbamoylpyrid-6-on, 1-(2′-Hydroxyethyl)-2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-hydroxysulfonylmethyl-5-carbamoylpyrid-6-on, 1-Ethyl-2-hydroxy-4-methyl-5-hydroxysulfonylmethylpyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethoxy-5-carbamoylpyrid-6-on, 2,6-Dihydroxy-4-ethyl-5-cyanopyridin, 2,6-Dihydroxy-4-ethyl-5-carbamoylpyridin, 1-Ethyl-2-hydroxy-4-methyl-5-hydroxysulfonylmethylpyrid-6-on, 1-Methyl-2-hydroxy-4-methyl-5-methylsulfonylpyrid-6-on oder 1-Carboxymethyl-2-hydroxy-4-ethyl-5-phenylsulfonylpyrid-6-on zu nennen.

Faserreaktivgruppenhaltige Kupplungskomponenten K der Anilin und Naphthalinreihe sind beispielsweise Verbindungen der Formel XIV a - e.

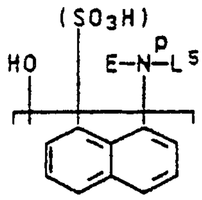
,
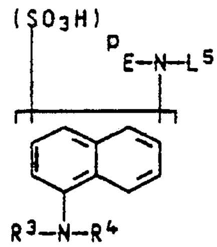
,
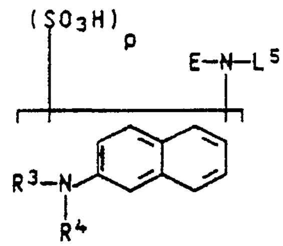
,
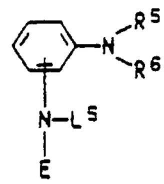

(XIV a) (XIV b) (XIV c) (XIV d)

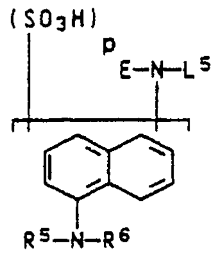
,

(XIV e)

wobei $L^5$, $R^3$, $R^4$, $R^5$, $R^6$, E und p jeweils die obengenannte Bedeutung besitzen.

Faserreaktivgruppenhaltige Kupplungskomponenten der Pyrazolon-, Aminopyrazol-, 2,6-Diaminopyridin-, Pyridon-, Hydroxy- oder Aminopyrimidin-, Indol-, oder Acetoacetarylidreihe entsprechen beispielsweise der Formel XV a - f.

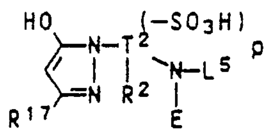
,
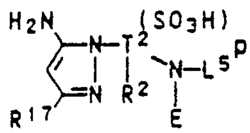
,
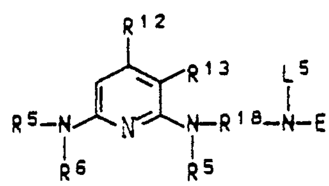

(XV a) (XV b) (XV c)

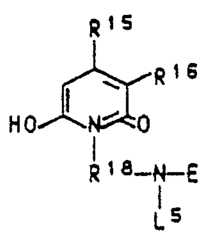
,
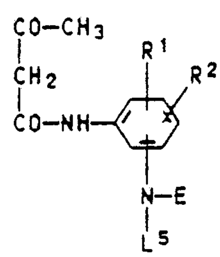
,
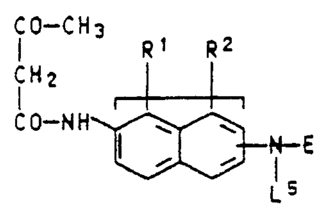

(XV d) (XV e) (XV f)

wobei

$T^2$ für einen Benzol- oder Naphthalinkern

$R^{17}$ für Methyl, Carboxyl, $C_1$-$C_4$-Alkoxycarbonyl oder Phenyl,

$R^{18}$ für $C_1$-$C_4$-Alkyl, Benzyl, Phenylethyl oder Phenyl, wobei die Phenylkerne jeweils noch durch Fluor, Chlor, Brom, Methyl, Methoxy, Cyano, Hydroxysulfonyl, Carboxyl, Acetyl, Nitro, Carbamoyl oder Sulfamoyl substituiert sein können, stehen und

$L^5$ $R^1$, $R^2$, $R^5$, $R^6$, $R^{12}$, $R^{13}$, $R^{15}$, $R^{16}$, p und E jeweils die obengenannte Bedeutung besitzen.

Faserreaktive Reste E tragende Pyrazolonkupplungskomponenten leiten sich beispielsweise von folgenden Pyrazolonen ab: 1-(3′- oder 4′-Aminophenyl)-, 1-(2′-Hydroxysulfonyl-5′-aminophenyl)-, 1-(2′-Methoxy-5′-aminophenyl)-3-carboxylpyrazol-5-on, 1-(3′- oder 4′-Aminophenyl)-, 1-(3′- oder 4′-Nitrophenyl)-3-methylpyrazol-5-on, 1-(3′-oder 4′-Nitrophenyl)-, 1-(6′-Nitro-4′, 8′-dihydroxysulfonylnaphth-2′-yl)-oder 1-(6′-Amino-4′,8′-dihydroxysulfonylnaphth-2′-yl)-3-carboxylpyrazol-5-on.

Anstelle der Azofarbstoffreste können die Farbstoffe der Formel I auch entsprechende Metallkomplexfarbstoffreste enthalten. Als komplexierende Metalle kommen dabei insbesondere Kupfer, Kobalt, Chrom, Nickel oder Eisen in Betracht, wobei Kupfer, Kobalt oder Chrom bevorzugt sind.

Dabei befinden sich die metallisierten Gruppen vorzugsweie jeweils in ortho-Stellung zur Azogruppe, z. B. in Form von o,o′-Dihydroxy-, o-Hydroxy-o′-carboxy-, o-Carboxy-o′-amino oder o-Hydroxy-o′-aminoazogruppierungen.

Die Erfindung betrifft weiterhin neue Benzylsulfonylverbindungen der Formel II

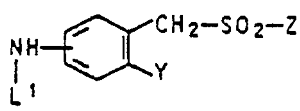
(II),

in der

$L^1$ Wasserstoff oder $C_1$-$C_4$-Alkyl,

Y Chlor, Cyano, Carbamoyl, Carboxyl, oder Hydroxysulfonyl und

Z Vinyl oder einen Rest der Formel $C_2H_4$-B bedeuten, in dem B für Chlor, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino,

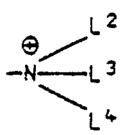 $W^{\ominus}$ , 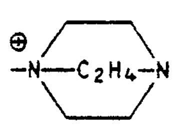 $W^{\ominus}$ 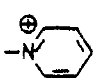 $W^{\ominus}$ oder 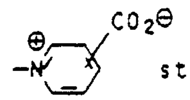 steht,

wobei $L^2$, $L^3$ und $L^4$ gleich oder verschieden sind und jeweils unabhängig voneinander die Bedeutung von $C_1$-$C_4$-Alkyl oder Benzyl und $W^{\ominus}$ jeweils die Bedeutung eines Anions besitzen.

Beispielhafte Reste $L^1$, $L^2$, $L^3$, $L^4$, $W^{\ominus}$, Y und Z sind bereits oben genannt.

Die neuen Benzylsulfonylverbindungen, die wertvolle Zwischenprodukte für die Synthese der neuen Doppelankerreaktivfarbstoffe darstellen, können nach an sich bekannten Methoden erhalten werden.

Beispielsweise kann 2-Chlorbenzylchlorid nitriert und anschließend mit 2-Thioethanol umgesetzt werden. Durch Oxidation des Schwefelatoms zur Sulfongruppe und Reduktion der Nitro- zur Aminogruppe, wobei diese Schritte in beliebiger Reihenfolge durchgeführt werden können, und anschließender Veresterung, z. B. mit Chlorsulfonsäure, gelangt man zum Benzylsulfon der Formel XVI

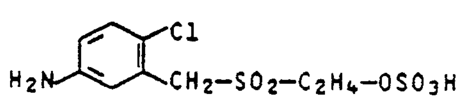
(XVI).

Es ist natürlich auch möglich, zuerst die Umsetzung von 2-Chlorbenzylchlorid mit 2-Thioethanol vorzunehmen und nach Durchführung von Oxidation und gegebenenfalls auch Veresterung die Nitrogruppe in den Benzolring einzuführen und sie dann zu reduzieren. Das 5-Nitro-2-chlorbenzylsulfon kann beispielsweise auch durch Austausch mit Sulfit in die entsprechende Hydroxysulfonylverbindung übergeführt werden, die auf bekannte Weise reduziert und in den Schwefelsäureester übergeführt wird.

Ausgehend von 2-Cyanobenzylchlorid gelangt man in analoger Weise zum entsprechenden 4-Amino-2-cyanobenzylsulfon. Durch Umwandlung der Cyanogruppe in an sich bekannter Weise gelangt man zu den entsprechenden 2-Carbamoyl- und 2-Carboxylbenzylsulfonylverbindungen, die sich auch aus dem jeweils bekannten 2-Carbamoylbenzylchlorid oder 2-Carboxylbenzylchlorid herstellen lassen.

Anstelle des Schwefelsäureesters können auf an sich bekanntem Wege auch andere Reste B in die Sulfonylethylgruppe eingeführt werden.

Aus Arch. Phytopathol. Pflanzenschutz 17, 341 (1981) sind bereits einige ähnliche Nitrobenzylsulfone bekannt, die in ortho-Stellung zur Benzylgruppe substituiert sind.

Die Herstellung der Reaktivfarbstoffe der Formel I erfolgt dadurch, daß man einen organischen Farbstoff der Formel XVII

A-H (XVII),

in der A die obengenannte Bedeutung besitzt, oder ein Farbstoffvorprodukt und die faseraktive Verbindung XVIII

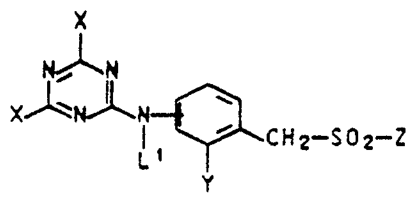

(XVIII),

in der $L^1$, X, Y und Z jeweils die obengenannte Bedeutung besitzen, kondensiert, und daß man im Falle der Verwendung von Farbstoffvorprodukten die erhaltenen Zwischenverbindungen nach an sich bekannten Methoden in die gewünschten Farbstoffe umwandelt.

Die Herstellung der Farbstoffe kann aber auch so erfolgen, daß man einen organischen Farbstoff der Formel XII oder ein Farbstoffvorprodukt mit 2,4,6-Trichlortriazin oder 2,4,6-Trifluortriazin kondensiert und in einem weiteren Reaktionsschritt mit einem Benzylsulfon der Formel II

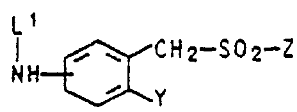

(II),

in der $L^1$, Y und Z jeweils die obengenannte Bedeutung besitzen, umsetzt.

Im Falle der Kondensation eines Farbstoffvorproduktes mit 2,4,6-Trichlor- oder 2,4,6-Trifluortriazin kann die weitere Umsetzung mit dem Benzylsulfon auf einer beliebigen geeigneten Stufe der Synthese des Endfarbstoffes erfolgen.

Die erfindungsgemäßen Doppelankerreaktivfarbstoffe eignen sich vorteilhaft zum Färben von hydroxylgruppenhaltigen Fasern, insbesondere von Baumwolle, sowie auch von Wolle.

Als Färbeverfahren eignen sich die bekannten Reaktivfärbeverfahren, insbesondere Ausziehverfahren bei 40 bis 80 °C und Kaltverweilverfahren. Die neuen Farbstoffe zeichnen sich durch hohe Ausgiebigkeit und hohe Naßechtheit aus.

Die folgenden Beispiele, in denen sich Angaben über Prozente sofern nicht anders vermerkt, auf das Gewicht beziehen, sollen die Erfindung näher erläutern.

Beispiel 1

18 g des Kondensationsproduktes aus 1,3-Phenylendiamin-4-sulfonsäure und Cyanurchlorid wurden mit 25 g Salzsäure (d = 1,09) und 3,5 g Natriumnitrit in 15 ml Wasser versetzt und 2 Stunden bei 0 - 3 °C gerührt. Zum Reaktionsgemisch gab man eine neutrale wäßrige Lösung von 15,2 g 1-Hydroxynaphthalin-3,6-disulfonsäure und führte die Kupplung durch Zugabe von Natriumhydrogencarbonat bei einem pH-Wert von 6 und 10 °C zu Ende. Danach gab man eine wäßrige Lösung von 13,3 g (2′-Sulfatoethyl)-5-amino-2-chlorbenzylsulfon, die einen pH-Wert von 6 aufwies, zu und rührte 2 Stunden bei einem pH-Wert von 5 - 6 und 40 °C nach. Dann salzte man mit Natriumchlorid aus und trocknete schonend unter vermindertem Druck. Der resultierende Farbstoff der Formel

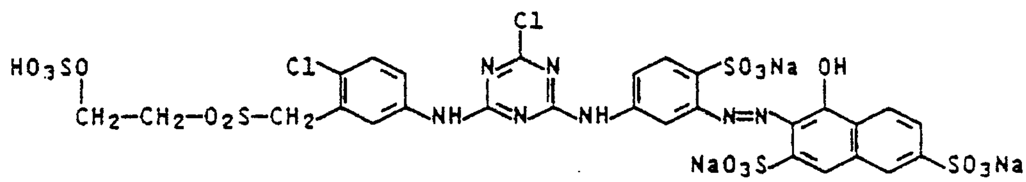

färbt Baumwolle in orangenen Nuancen mit guten Echtheiten.

Beispiel 2

18 g des Kondensationsproduktes von 1,3-Phenylendiamin-4-sulfonsäure und Cyanurchlorid wurden salzsauer diazotiert und mit einer neutralen wäßrigen Lösung von 14,2 g 1-(4-Hydroxysulfonyl)-3-carboxyl-5-hydroxypyrazol versetzt und 2 Stunden bei einem pH-Wert von 5 - 6 und 15 °C gerührt. Man setzte eine Lösung von 13,4 g (2′-Chlorethyl)-5-amino-2-chlorbenzylsulfon in Aceton zu und hielt 2 Stunden bei einem pH-Wert von 5 - 6 und 40 °C. Das resultierende Produkt wurde mit Natriumchlorid ausgesalzen und abfiltriert. Es entspricht der Formel

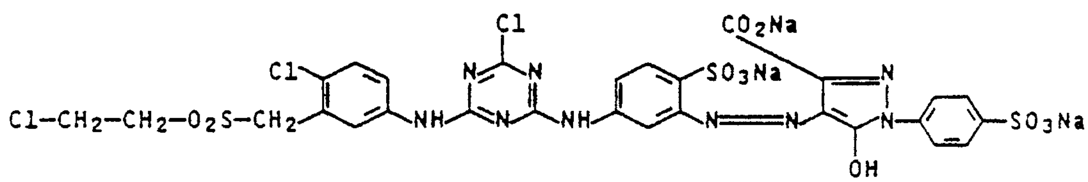

und färbt Baumwolle in leuchtend gelben Farbtönen.

Beispiel 3

13,5 g (2′-Sulfatoethyl)-5-amino-2-chlorbenzylsulfon wurden in 100 ml Eiswasser mit Natriumhydrogencarbonat bei einem pH-Wert von 6 gelöst und bei 0 - 3 °C mit einer Lösung von 71 g 2,4,6-Trifluortriazin in 30 g Toluol versetzt. Man rührte 30 Minuten nach und hielt den pH-Wert durch Einstreuen von Natriumhydrogencarbonat bei 5 - 6. Sobald keine freien Aminogruppen mehr nachweisbar waren, wurde eine neutrale wäßrige Lösung von 30 g 2-(3′-Hydroxysulfonyl-phenylamino)-6-hydroxysulfonyl-7-(2′-chlor-5′-amino-3′-hydroxysulfonyl-phenylazo)-8-hydroxynaphthalin zugesetzt. Man rührte 2 Stunden bei Raumtemperatur nach, stellte den pH-Wert auf 5 - 6 ein, fällte mit Kaliumchlorid und filtrierte. Der erhaltene Farbstoff der Formel

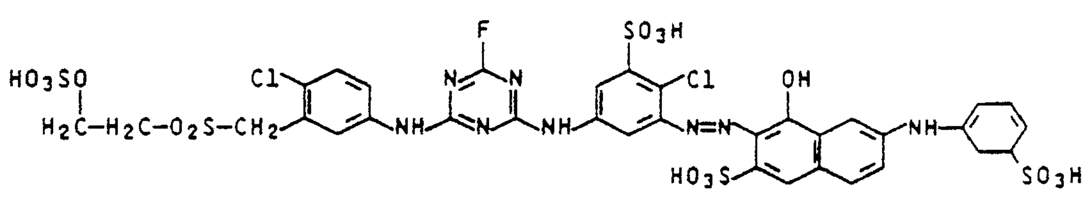

färbt Baumwolle in echten braunen Tönen.

In analoger Weise erhält man die in Tabelle 1 aufgeführten Farbstoffe, die auf Baumwolle echte Färbungen mit den angegebenen Nuancen ergeben.

Tabelle 1

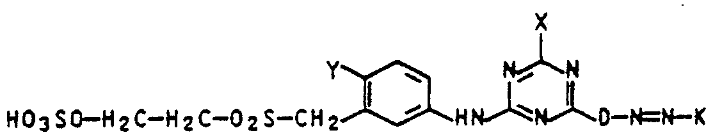

| Bsp. | Y | X | D | K | Nuance auf Baumwolle |
|---|---|---|---|---|---|
| 4 | Cl | F | 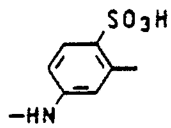 | 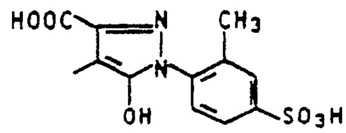 | gelb |
| 5 | Cl | Cl | 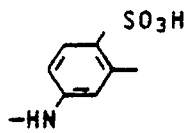 | 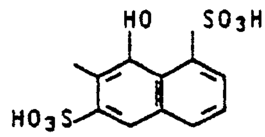 | scharlach |
| 6 | Cl | Cl | 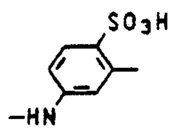 | 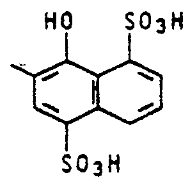 | gelbstichig rot |
| 7 | H | Cl | 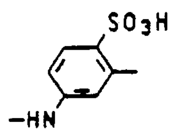 | 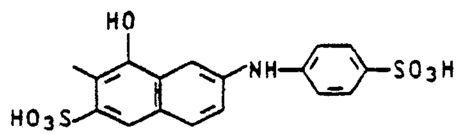 | braun |

Tabelle 1 (Fortsetzung)

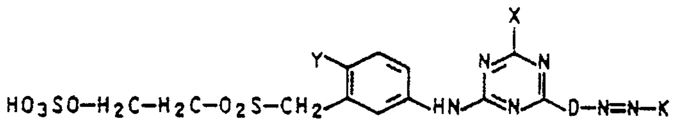

| Bsp. | Y | X | D | K | Nuance auf Baumwolle |
|---|---|---|---|---|---|
| 8 | Cl | Cl | 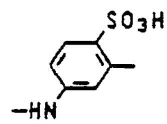 | 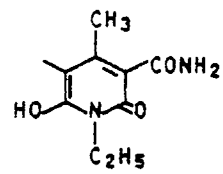 | gelb |
| 9 | Cl | Cl | 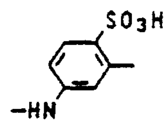 | 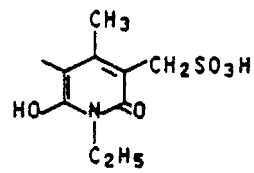 | gelb |
| 10 | Cl | Cl | 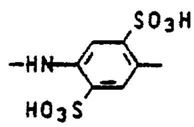 | 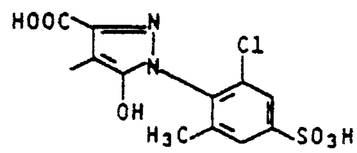 | rotstichig gelb |
| 11 | Cl | Cl | 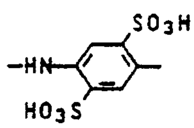 | 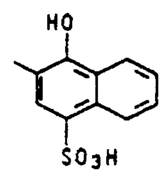 | scharlach |
| 12 | H | Cl | 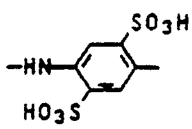 | 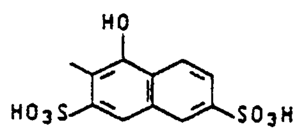 | scharlach |
| 13 | Cl | Cl | 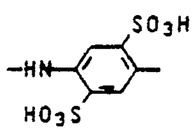 | 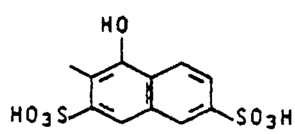 | scharlach |
| 14 | Cl | Cl | 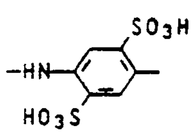 | 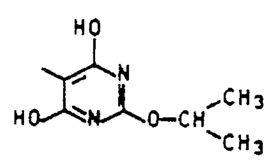 | gelb |
| 15 | Cl | Cl | 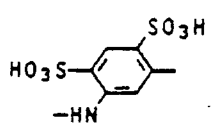 | 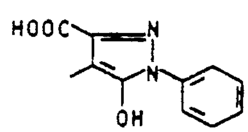 | gelb |

Tabelle 1 (Fortsetzung)

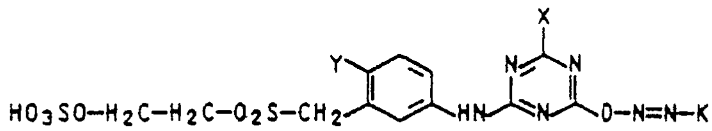

| Bsp. | Y | X | $D_2$ | K | Nuance auf Baumwolle |
|---|---|---|---|---|---|
| 16 | Cl | Cl | 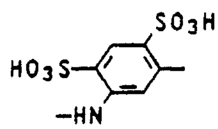 | 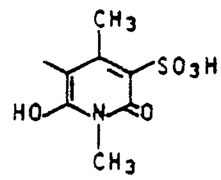 | grüngelb |
| 17 | Cl | Cl | 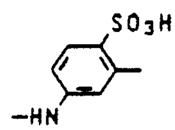 | 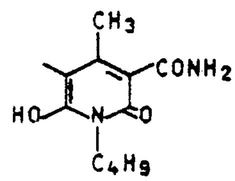 | grüngelb |
| 18 | Cl | Cl | 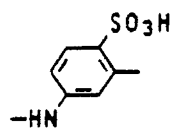 | 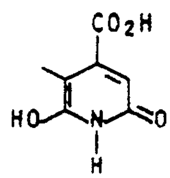 | grüngelb |
| 19 | Cl | Cl | 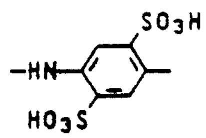 | 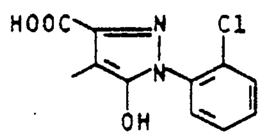 | rotstichig gelb |

Beispiel 20

38,5 g 2-Aminonaphthalin-3,6,8-trisulfonsäure wurden salzsauer diazotriert und auf 15 g 3-Acetylaminoanilin gekuppelt. Man setzte dann bei 20 °C eine Suspension von 19 g Cyanurchlorid in 200 ml Eiswasser zu und hielt den pH-Wert durch Zugabe von Natriumcarbonat bei 6 - 7.

Als keine freie Aminogruppe mehr nachweisbar war, wurde mit 25,9 g (2′-Chlorethyl)-4-amino-2-cyanobenzylsulfon versetzt und 2 Stunden bei einem pH-Wert von 5 - 6 und 40 °C gerührt. Nach beendeter Umsetzung wurde mit Natriumchlorid ausgesalzen, filtriert und schonend unter vermindertem Druck getrocknet. Man erhielt den Farbstoff der Formel

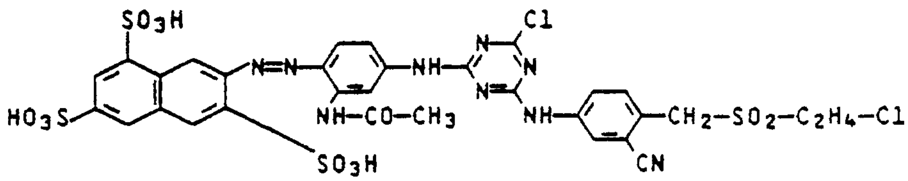

der auf Baumwolle echte rotstichig gelbe Nuancen ergibt.

Analog Beispiel 20 erhält man die in Tabelle 2 angegebenen Farbstoffe, die Baumwolle in echten brillanten goldgelben Tönen färben.

**Tabelle 2**

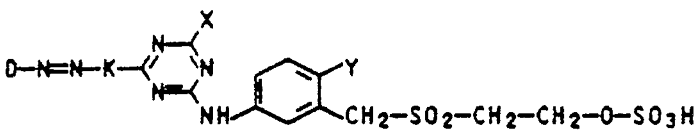

| Bsp. | D | K | X | Y | Nuance auf Baumwolle |
|---|---|---|---|---|---|
| 21 | 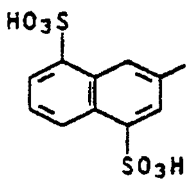 | 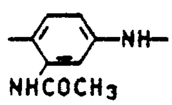 | Cl | Cl | rotstichig gelb |
| 22 | 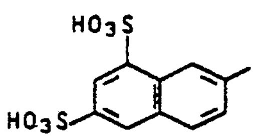 | 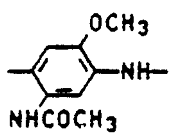 | Cl | Cl | rotstichig gelb |
| 23 | 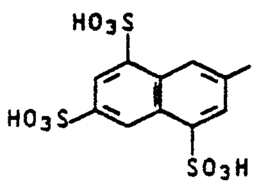 | 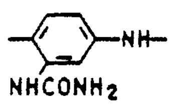 | Cl | Cl | rotstichig gelb |

Tabelle 2 (Fortsetzung)

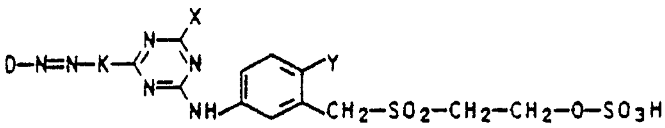

| Bsp. | D | K | X | Y | Nuance auf Baumwolle |
|---|---|---|---|---|---|
| 24 | 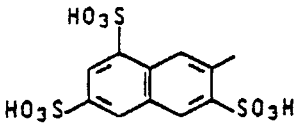 | 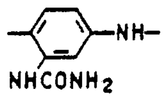 | Cl | Cl | rotstichig gelb |
| 25 | 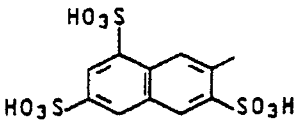 | 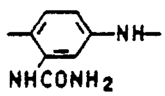 | Cl | H | rotstichig gelb |
| 26 | 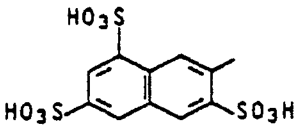 | 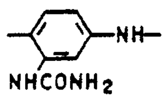 | F | Cl | rotstichig gelb |
| 27 | 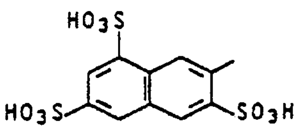 | 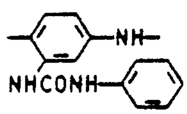 | Cl | Cl | rotstichig gelb |
| 28 | 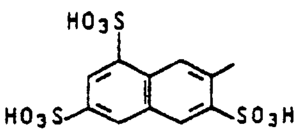 | 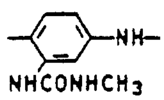 | Cl | Cl | rotstichig gelb |
| 29 | 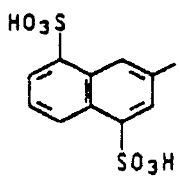 | 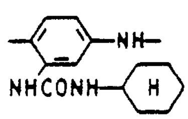 | F | Cl | rotstichig gelb |
| 30 | 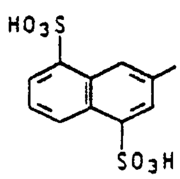 | 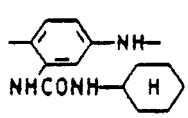 | Cl | Cl | rotstichig gelb |
| 31 | 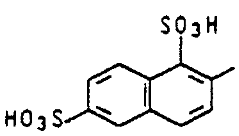 | 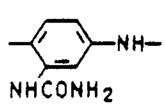 | Cl | Cl | rotstichig gelb |

Tabelle 2 (Fortsetzung)

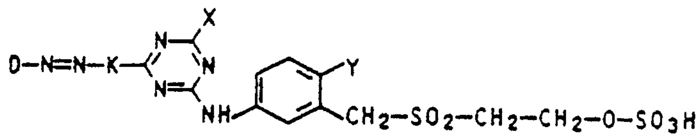

| Bsp. | D | K | X | Y | Nuance auf Baumwolle |
|---|---|---|---|---|---|
| 32 | 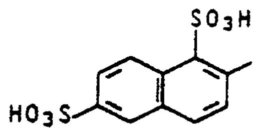 | 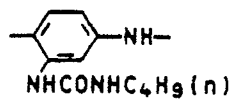 | Cl | Cl | rotstichig gelb |
| 33 | 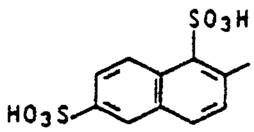 | 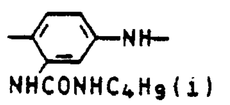 | Cl | Cl | rotstichig gelb |

Beispiel 34

77 g der auf üblichem Weg hergestellten Aminodisazoverbindung der Formel

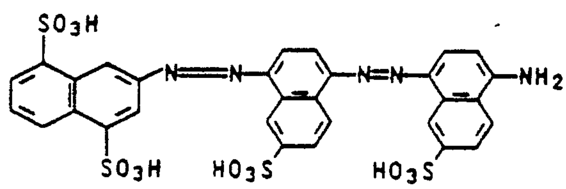

wurden in 500 ml Wasser bei einem pH-Wert von 6.5 gelöst und bei 20-25 °C mit einer Suspension von 19 g Cyanurchlorid in 200 ml Eiswasser umgesetzt. Danach gab man eine neutrale wäßrige Lösung von 26.5 g (2′-Sulfatoethyl)-5-amino-2-clorbenzylsulfon zu und rührte 2 Stunden bei 40 °C nach, wobei durch Einstreuen von Natriumbicarbonat ein pH Wert von 5-6 eingehalten wurde. Der erhaltene Farbstoff der Formel

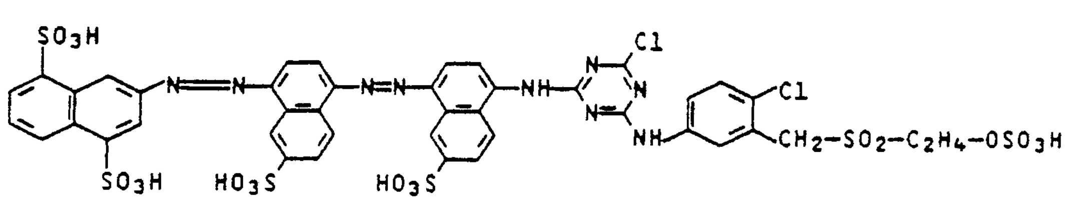

wurde mit Natriumchlorid ausgesalzen, abfiltriert und schonend unter vermindertem Druck getrocknet. Er färbt Baumwolle in echten rotbraunen Tönen.

Weitere Braunfarbstoffe, die auf analoge Weise erhalten werden, sind in Tabelle 3 aufgeführt.

Tabelle 3

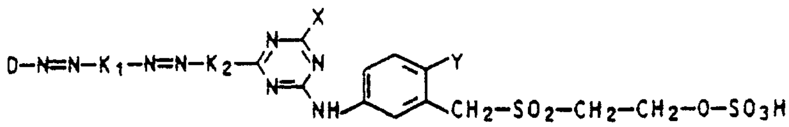

| Bsp. | $D-N=N-K_1-N=N-K_2-$ | X | Y | Nuance auf Baumwolle |
|---|---|---|---|---|
| 35 | 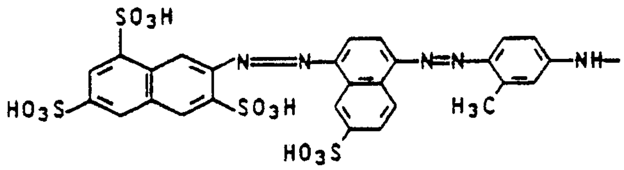 | F | Cl | braun |
| 36 | 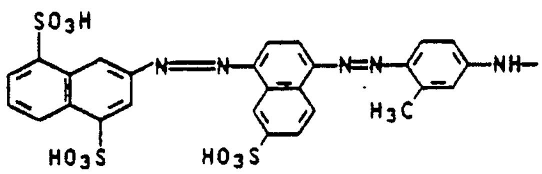 | Cl | Cl | braun |
| 37 | 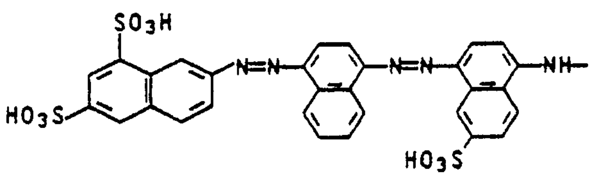 | Cl | Cl | rotbraun |
| 38 | 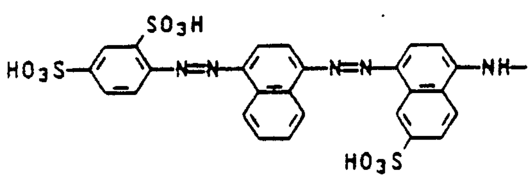 | Cl | Cl | rotbraun |
| 39 | 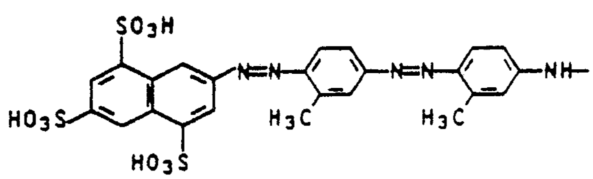 | Cl | Cl | orange-braun |
| 40 | 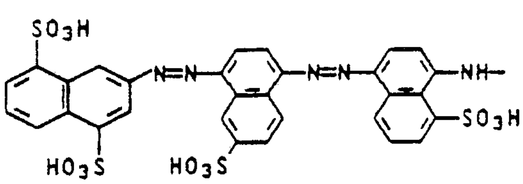 | Cl | Cl | rotbraun |
| 41 | 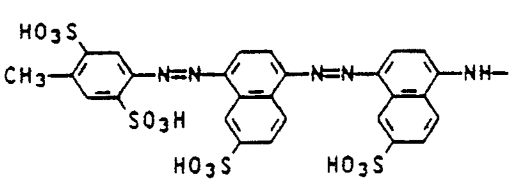 | Cl | Cl | rotbraun |

Beispiel 42

Zu einer wäßrigen Suspension des Kondensationsproduktes aus 31,9 g 1-Amino-8-hydroxynaphthalin-3,6-disulfonsäure und 19 g Cyanurchlorid wurde eine aus 18,7 g 4-Methylanilin-2-sulfonsäure hergestellte salzsaure Diazoniumsalzlösung gegeben und mit Natriumhydrogencarbonat ein pH-Wert von 5,5-6 gehalten. Nach beendeter Kupplung wurde mit 26,5 g (2′-Sulfatoethyl)-5-amino-2-chlorbenzylsulfon versetzt und 2 Stunden bei einem pH-Wert von 5 - 6 und 40 °C umgesetzt. Der Farbstoff der Formel

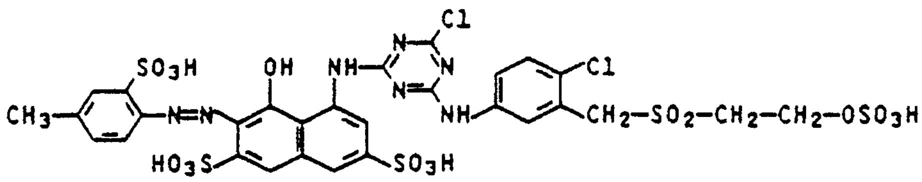

ergibt auf Baumwolle rote Färbungen mit guten Licht- und Naßechtheiten.

In anloger Weise werden die in Tabellen 4. 5 und 6 aufgeführten Farbstoffe erhalten.

Tabelle 4

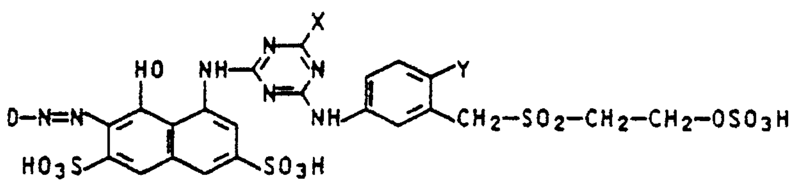

| Bsp. | D | X | Y | Nuance auf Baumwolle |
|---|---|---|---|---|
| 43 | 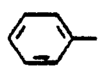 | Cl | H | rot |
| 44 | 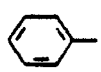 | Cl | Cl | rot |
| 45 | 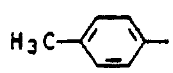 | Cl | Cl | rot |

Tabelle 4 (Fortsetzung)

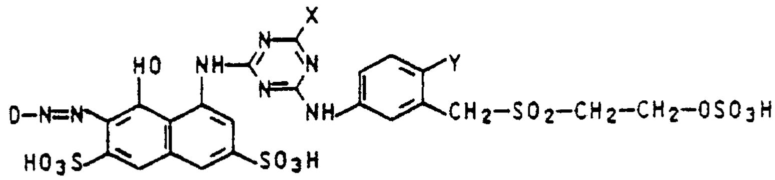

| Bsp. | D | X | Y | Nuance auf Baumwolle |
|---|---|---|---|---|
| 46 | 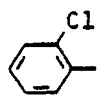 | Cl | Cl | rot |
| 47 | 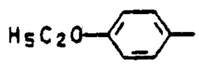 | Cl | Cl | blaustichig rot |
| 48 | 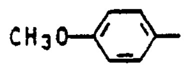 | Cl | Cl | blaustichig rot |
| 49 | 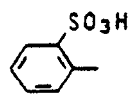 | Cl | Cl | rot |
| 50 | 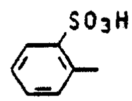 | F | Cl | rot |
| 51 | 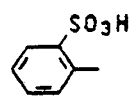 | Cl | H | rot |
| 52 | 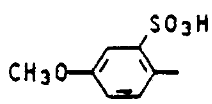 | Cl | Cl | blaustichig rot |
| 53 | 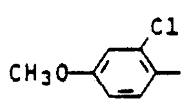 | Cl | Cl | rot |
| 54 | 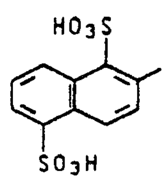 | Cl | Cl | blaustichig rot |

Tabelle 4 (Fortsetzung)

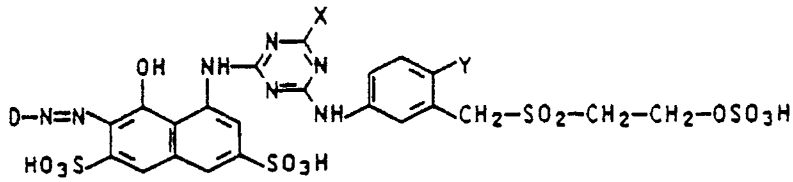

| Bsp. | D | X | Y | Nuance auf Baumwolle |
|---|---|---|---|---|
| 55 | 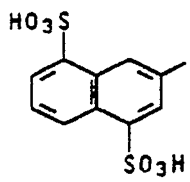 | F | Cl | blaustichig rot |
| 56 | 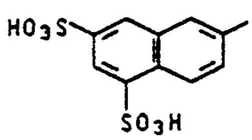 | Cl | Cl | blaustichig rot |
| 57 | 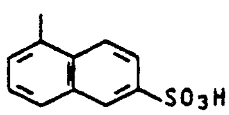 | Cl | Cl | blaustichig rot |
| 58 | 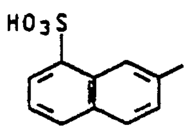 | Cl | Cl | blaustichig rot |
| 59 | 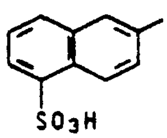 | Cl | Cl | blaustichig rot |
| 60 | 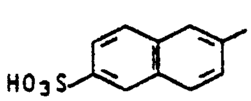 | Cl | Cl | blaustichig rot |
| 61 | 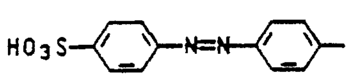 | Cl | Cl | rotviolett |

Tabelle 5

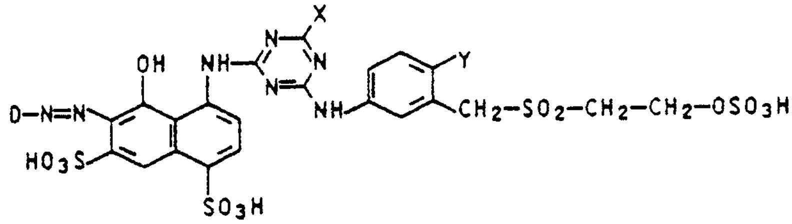

| Bsp. | D | X | Y | Nuance auf Baumwolle |
|---|---|---|---|---|
| 62 | 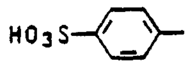 | Cl | Cl | scharlach-rot |
| 63 | 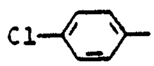 | Cl | Cl | scharlach-rot |
| 64 | 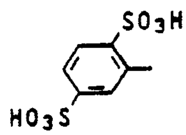 | Cl | Cl | scharlach-rot |

Tabelle 6

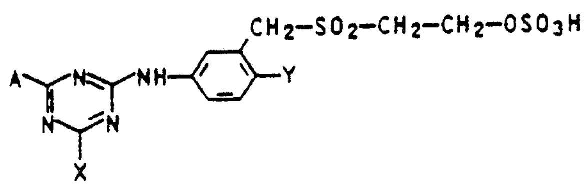

| Bsp. | A | X | Y | |
|---|---|---|---|---|
| 65 | 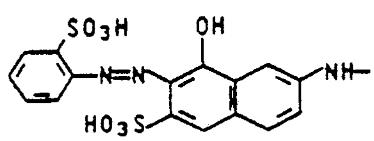 | Cl | Cl | rot |
| 66 | 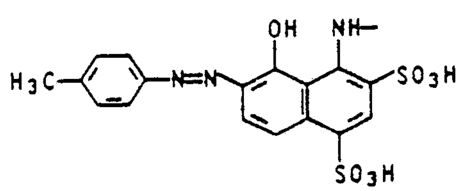 | Cl | Cl | rot |
| 67 | 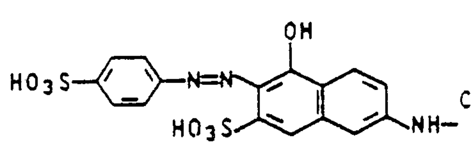 | Cl | Cl | orange |

Tabelle 6 (Fortsetzung)

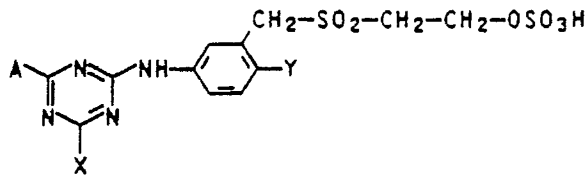

| Bsp. | A | X | Y | Nuance auf Baumwolle |
|---|---|---|---|---|
| 68 | 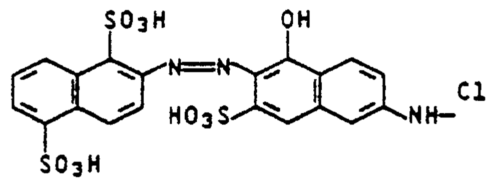 | Cl | Cl | orange |
| 69 | 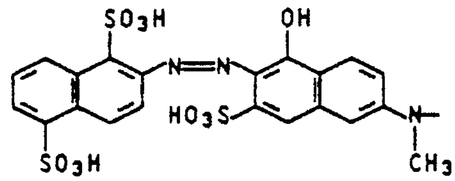 | Cl | Cl | orange |
| 70 | 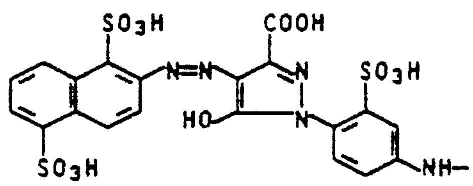 | Cl | Cl | gelb |
| 71 | 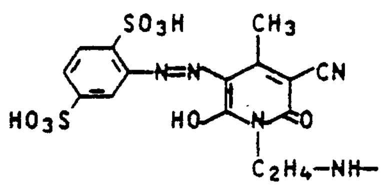 | Cl | Cl | gelb |

Beispiel 72

Das Kondensationsprodukt aus 18,8 g 1,3-Diaminobenzolsulfonsäure und 19 g Cyanurchlorid wurde wie in Beispiel 1 beschrieben, diazotiert und auf 37,5 g 1-Propionylamino-8-hydroxynaphthalin-3,6-disulfonsäure gekuppelt. Danach wurde mit 26,5 g (2′-Sulfatoethyl)-5-amino-2-chlorbenzylsulfon umgesetzt. Der resultierende Farbstoff besitzt die Formel

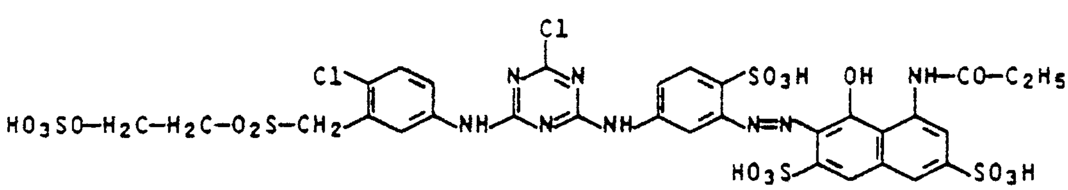

und färbt Baumwolle in echten roten Tönen.

Analog Beispiel 72 werden die in Tabelle 7 aufgeführten Monoazofarbstoffe erhalten.

Tabelle 7

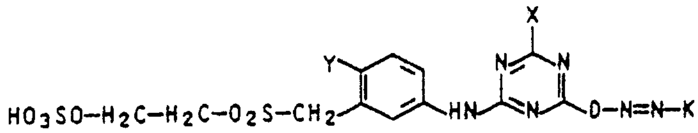

| Bsp. | Y | X | D | K | Nuance auf Baumwolle |
|---|---|---|---|---|---|
| 73 | Cl | Cl | 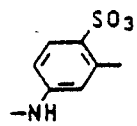 | 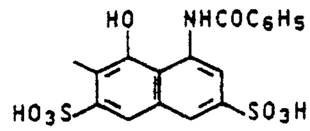 | rot |
| 74 | Cl | Cl | 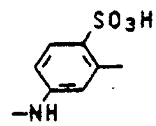 | 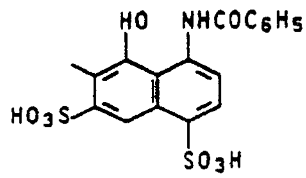 | rot |
| 75 | Cl | Cl | 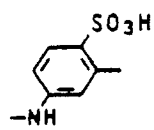 | 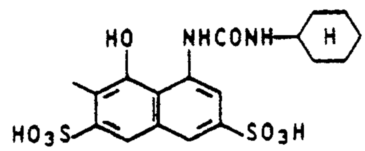 | rot |
| 76 | Cl | Cl | 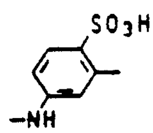 | 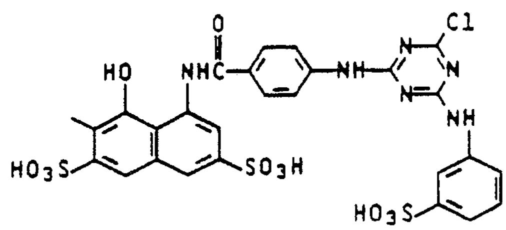 | rot |
| 77 | Cl | Cl | 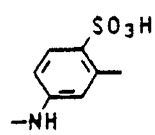 | 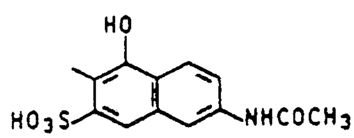 | orange |
| 78 | Cl | Cl | 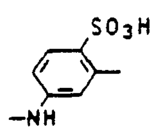 | 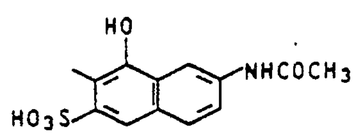 | rot |
| 79 | Cl | Cl | 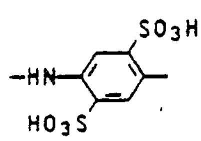 | 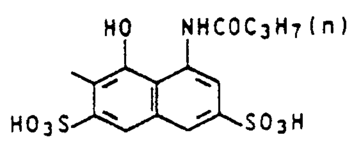 | blaustichig rot |

Tabelle 7 (Fortsetzung)

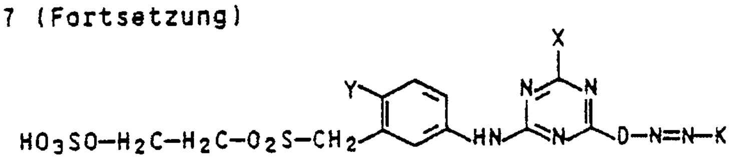

| Bsp. | Y | X | D | K | Nuance auf Baumwolle |
|---|---|---|---|---|---|
| 79a | Cl | Cl | 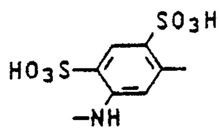 | 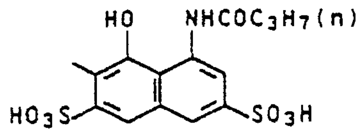 | blaustichig rot |

Beispiel 80

64,8 g des bekannten Farbstoffs der Formel

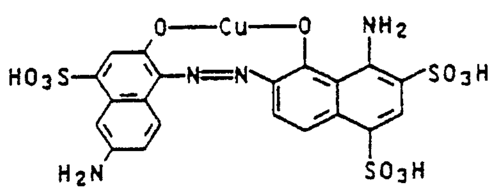

wurden in 700 ml Wasser angerührt und bei einem pH-Wert von 5.5 - 6 und 20-25 °C mit 19 g Cyanurchlorid umgesetzt.

Man gab 26,5 Teile (2′-Sulfatoethyl)-5-amino-2-chlorbenzylsulfon hinzu und hielt 2 Stunden bei einem pH-Wert von 5,5 - 6 und 40 - 45 °C. Der resultierende Farbstoff wurde mit Natriumchlorid ausgesalzen. abfiltriert und unter vermindertem Druck getrocknet. Es entspricht der Formel

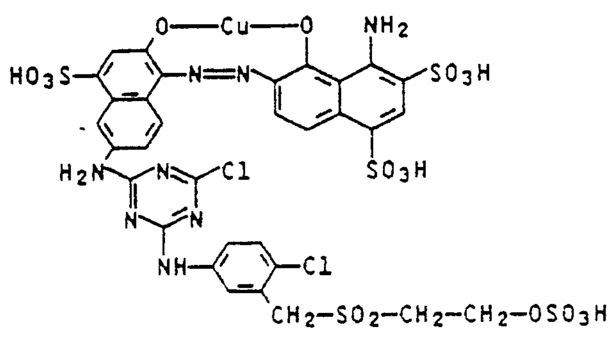

und färbt Baumwolle in echten blauen Tönen.

Beispiel 81

77,7 g des bekannten Farbstoffs der Formel

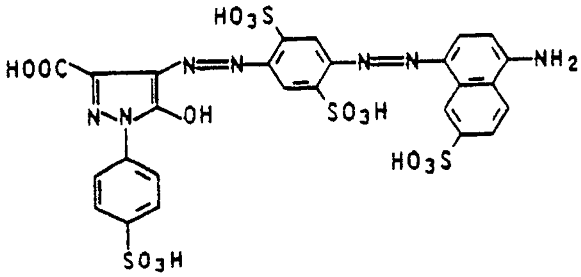

wurden in 1000 ml Wasser neutral gelöst, bei 20 °C mit einer Suspension von 19 g Cyanurchlorid in 100 ml Eiswasser versetzt und 2 Stunden gerührt, wobei der pH-Wert durch Einstreuen von Natriumcarbonat konstant gehalten wurde. Sobald keine freie Aminogruppen mehr nachweisbar waren, wurde eine neutrale wäßrige Lösung von 26,5 g (2′-Sulfatoethyl)-5-amino-2-chlorbenzylsulfon zugesetzt und 3 Stunden bei einem pH-Wert von 5 - 6 und 40 - 45 °C gerührt. Anschließend wurde mit Kaliumchlorid ausgesalzen, filtriert und schonend unterverminderterm Druck getrocknet. Der erhaltene Farbstoff der Formel

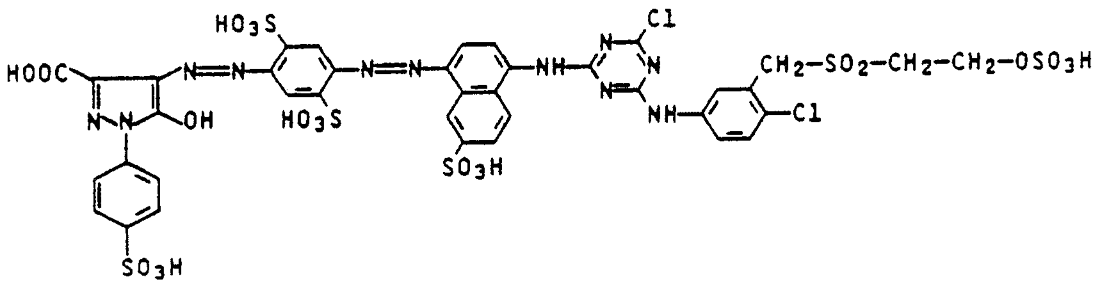

färbt Baumwolle in orangen Tönen mit allgemein guten Gebrauchsechtheiten.

Analog Beispiel 81 werden die in Tabelle 8 aufgeführten Farbstoffe erhalten, die auf Baumwolle Färbungen mit ähnlichem Echtheitsniveau ergeben.

**Tabelle 8**

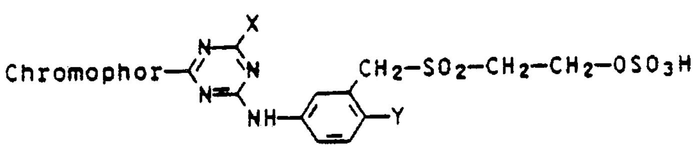

| Bsp. | Chromophor | X | Y | Nuance auf Baumwolle |
|---|---|---|---|---|
| 82 | 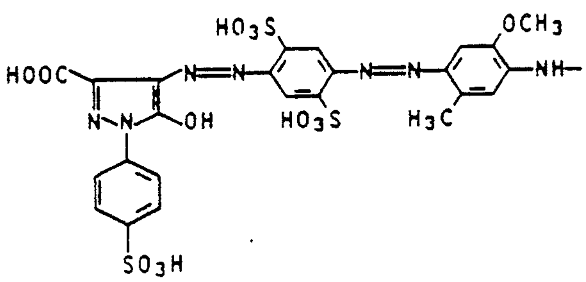 | Cl | Cl | orange |

Tabelle 8 (Fortsetzung)

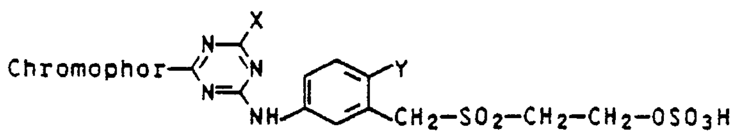

| Bsp. | Chromophor | X | Y | Nuance auf Baumwolle |
|---|---|---|---|---|
| 83 | 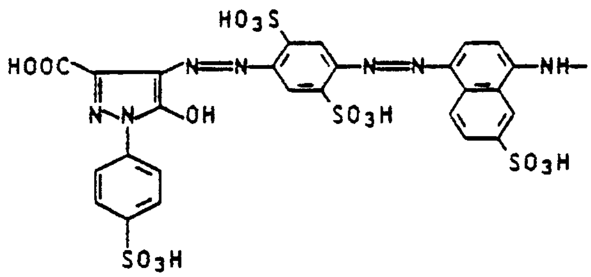 | Cl | Cl | orange |
| 84 | 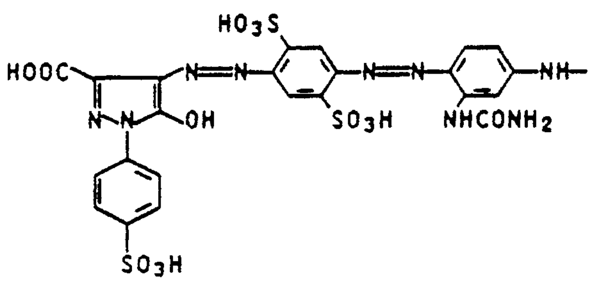 | Cl | Cl | rotbraun |
| 85 | 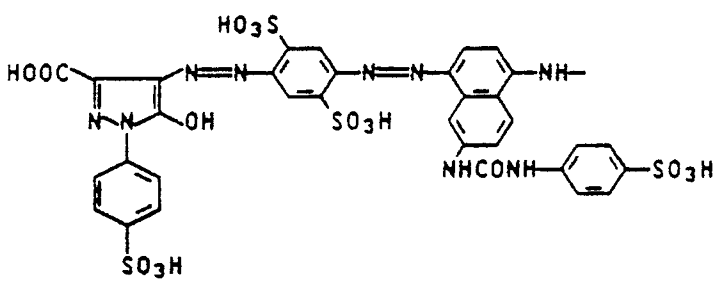 | Cl | Cl | rotbraun |
| 86 | 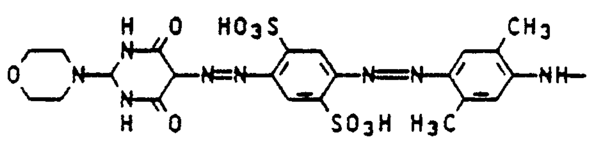 | Cl | Cl | rotbraun |
| 87 | 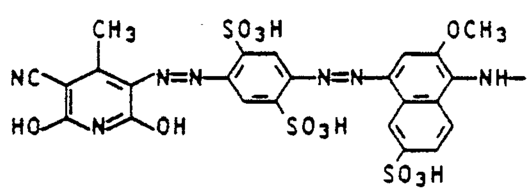 | Cl | Cl | orange |

Beispiel 88

995 g 2-Chlorbenzylchlorid wurden bei 0 - 5 °C in 5370 g konz. Schwefelsäure gelöst. In die auf -10 °C gekühlte Lösung wurden 370 g 98 %iger Salpetersäure in 5 Stunden zugetropft. Nach 0,5 Stunden Rühren fällte man die Suspension auf 3000 ml Eis. Der Niederschlag wurde abgesaugt, mit Eiswasser neutral gewaschen und bei 40 °C unter vermindertem Druck getrocknet. Man erhilt 1100 g Produkt der Formel:

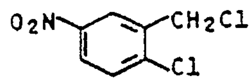

Analyse: theor. Chlor kovalent 34,5 %
gef. Chlor kovalent 34,3 %

In analoger Weise werden die folgenden Benzylchloride erhalten.

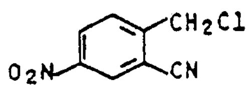 (88 a)

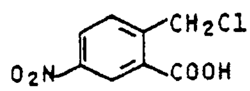 (88 b)

4-Nitro-2-chlormethylbenzamid der Formel

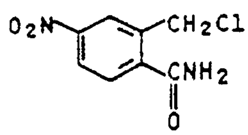 (88 c)

wurde nach der in Chem. Abstr. 66, 2430s (1967), beschriebenen Methode erhalten.

Beispiel 89

350 g 5-Nitro-2-chlorbenzylchlorid, 136 g 2-Mercaptoethanol und 234,5 g Kaliumcarbonat in 1700 ml Wasser wurden unter Stickstoff 4 Stunden bei 40 °C und 1 Stunde bei 60 °C gerührt. Die Reaktionslösung wurde mit essigsäure auf pH 6 gestellt und nach Zugabe von 10 g Wolframsäure mit 2060 g 15 %iger Wasserstoffperoxidlösung bei 55 °C versetzt. Nach Beendigung der exothermen Reaktion wurde 3 Stunden bei 85 °C und 12 Stunden bei 20 °C nachgerührt. Das ausgefallen Produkt wurde isoliert, mit Wasser gewaschen und unter vermindertem Druck bei 50 °C getrocknet Man erhielt 395 g analysenreines Produkt folgender Konstitution:

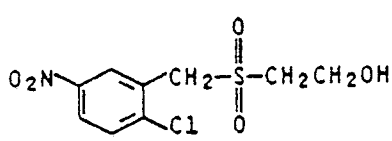

Analyse:
theor. Chlor kovalent 12,7 %
gef. Chlor kovalent 12,4 %
Schmp.: 127 - 128 °C

Beispiel 90

Man verfuhr analog Beispiel 89, benutzte jedoch anstelle von 350 g 5-Nitro-2-chlorbenzylchlorid 334 g 4-Nitro-2-cyanobenzylchlorid und erhielt folgendes Produkt der Formel

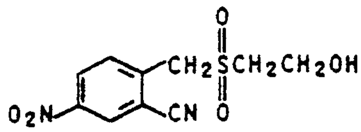

Schmp.: 140 °C

In analoger Weise werden die folgenden Zwischenprodukte erhalten:

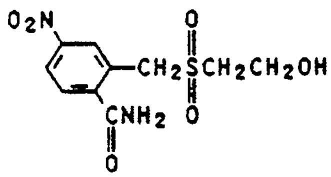

(90 a)

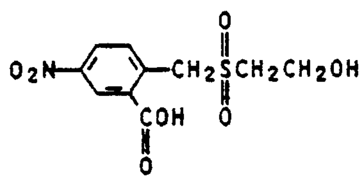

(90 b)

Beispiel 91

200 g des in Beispiel 89 erhaltenen Produktes wurden in 1500 g Methanol katalytisch mit Raney-Nickel bei 30 °C reduziert. Die eingeengte Reaktionsmasse kristallisierte innerhalb einer Stunde. Man erhielt das Amin der Formel

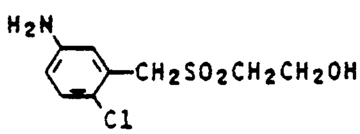

Schmp.: 157 - 158 °C

In analoger Weise werden die folgenden Amine erhalten:

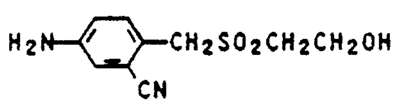

(91 a)

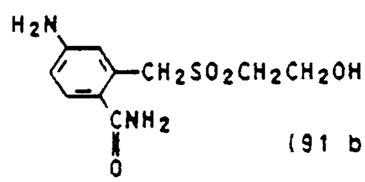

(91 b)

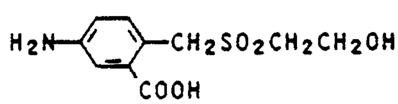

(91 c)

Beispiel 92

100 g des in Beispiel 91 erhaltenen Amins (gut getrocknet und fein gepulvert) wurden bei 20 °C in 400 g Chlorsulfonsäure eingerührt und die viskose Masse wurde 2 Stunden bei 45 °C nachgerührt. Nach Austragen auf 1000 ml Eiswasser erfolgte spontan die Kristallisation. Die Fällung wurde filtriert, mit Aceton schwefelsäurefrei gewaschen und getrocknet. Die Ausbeute war nahezu quantitativ. Das Produkt entsprach der Formel:

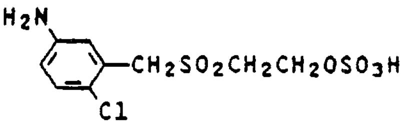

In analoger Weise werden die folgenden Schwefelsäureester erhalten:

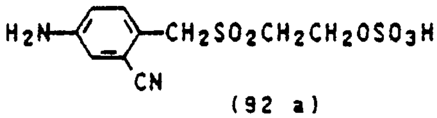

(92 a)

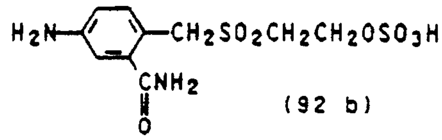

(92 b)

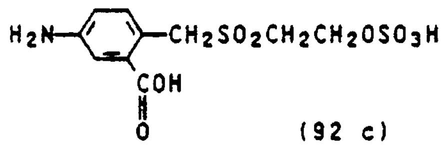

(92 c)

Beispiel 93

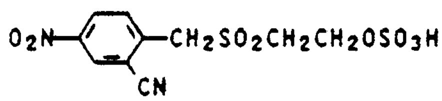

152 g 2-Cyanobenzylchlorid, 88 g 2-Mercaptoethanol und 138 g Kaliumcarbonat wurden in 750 ml Wasser 12 Stunden Bei 25 °C gerührt. Mit Essigsäure wurde die Reaktionslösung auf pH 6 gestellt und nach Zugabe von 5 g Wolframsäure mit 800 g 30 %iger Wasserstoffperoxidlösung bei 60 °C versetzt. Nach Beendigung der exothermen Reaktion wurde 1 Stunde bei 80 °C nachgerührt. Nach Erkalten der Suspension wurde das ausgefallene Produkt mit Wassser gewaschen und bei 60 °C getrocknet. Man isolierte 202 g eines Produktes der Formel

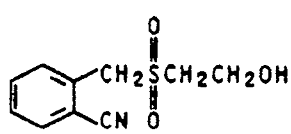

mit Schmp.: 143 - 144 °C

45 g dieses Produktes wurden in 450 g 96 %iger Schwefelsäure gelöst und bei -10 °C mit der äquimolaren Menge an 98 %iger Salpetersäure versetzt. Man rührte 12 Stunden bei 20 °C. fällte die Schmelze langsam auf 500 ml Eiswasser, und fällte mit 200 g Kaliumchlorid nahezu quantitativ das Zielprodukt aus.

In analoger Weise werden die folgenden Produkte erhalten:

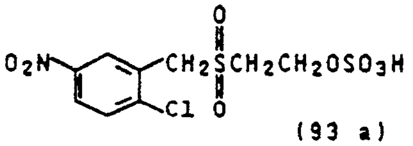

(93 a)

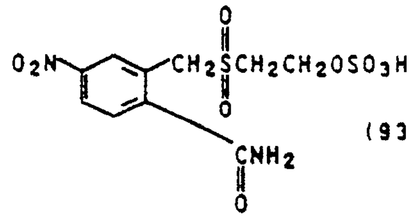

(93 b)

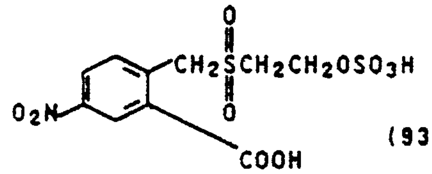

(93 c)

Beispiel 94

Die Hydrierung der in Beispiel 93 erhaltenen Produkte erfolgte katalytisch mit Raney-Nickel in Wasser bei 40 °C. Nach Abfiltrieren des Katalysators erfolgt die Kristallistation in der neutralen, eingeengten Lösung bei 0 °C. Die Produkte entsprachen den im Beispiel 92 erhaltenen Schwefelsäureestern.

Beispiel 95

196 g des in Beispiel 89 erhaltenen Produktes wurde in 1400 g Toluol suspendiert und nach Zugabe von 560 g Thionylchlorid und 20 g N,N-Dimethylformamid 3 Stunden bei 60 °C, 2 Stunden bei 80 °C und 2 Stunden bei 100 °C gerührt. Nach Kühlen auf 5 - 10 °C wurde das ausgefallene Produkt isoliert, mit Petrolether gewaschen und getrocknet. Es wurde analysenreines Produkt der Formel

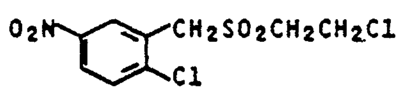

erhalten. Schmelzpunkt 117 °C.
Analyse: theor. Chlor kovalent 23,8 %
gef. Chlor kovalent 23,6 %

In analoger Weise werden die folgenden Verbindungen erhalten.

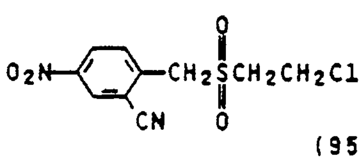

(95 a)

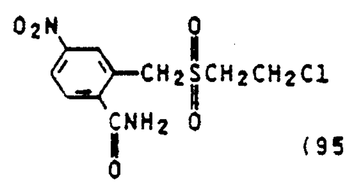

(95 b)

Beispiel 96

Reduktion der in Beispiel 95 beschriebenen Produkte erfolgte analog Beispiel 91. Man erhielt nahezu quantitativ die folgenden Amine

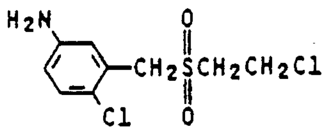
(96 a)

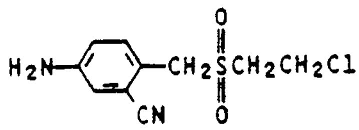
(96 b)

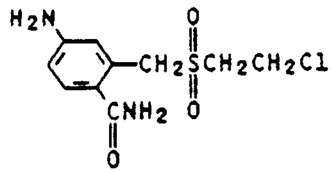
(96 c)

Beispiel 97

120 g der in Beispiel 95 beschriebenen Verbindung wurden in 1000 ml Wasser und 1000 g Methanol bei 40 °C suspendiert. Man stellte die Lösung mit 5 %iger Natronlauge auf pH 9 und rührte eine Stunde unter Einhaltung von pH 8,5 - 9 bei 40 °C. Das Produkt wurde isoliert, mit Wasser gewaschen und bei 40 °C unter vermindertem Druck getrocknet. Man isolierte 86 g analysenreines Produkt der Formel

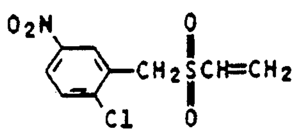

Analyse theor. Chlor kovalent 13,6 %
gef. Chlor kovalent 13,4 %

In analoger Weise werden die folgenden die Verbindungen erhalten.

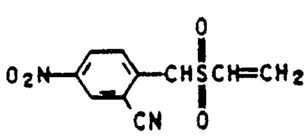
(97 a)

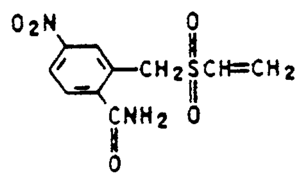
(97 b)

Beispiel 98

Reduktion der in Beispiel 97 erhaltenen Produkte erfolgte wie in Beispiel 91 beschrieben. Die Amine der Formeln 98 a bis 98 c wurden nach Abdestillieren des Lösungsmittels in kristalliner Form erhalten.

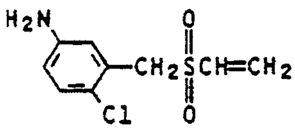

(98 a)

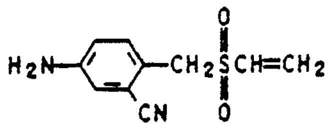

(98 b)

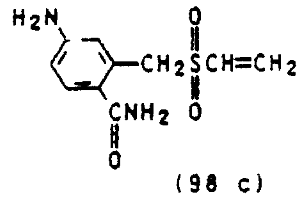

(98 c)

Beispiel 99

28 g des in Beispiel 89 beschriebenen Produktes und 32 g Natriumsulfit wurden in 150 ml Wasser und 150 g Ethanol 10 Stunden im Autoklaven auf 100 °C erhitzt. Nach Abdestillieren des Lösungsmittels unter vermindertem Druck wurde der Rückstand in 200 ml Wasser heiß gelöst, von unlöslichen Bestandteilen abfiltriert und das auf pH 6 gestellte Filtrat katalytisch mit Raney-Nickel bei 40 °C hydriert. Nach Abtrennung des Katalysators wurde die Lösung mit 50 g Kaliumchlorid versetzt und ein Produkt isoliert, dessen Hauptanteil der Formel

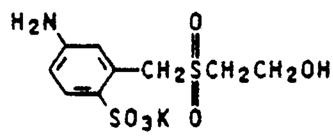

entsprach. Die Überführung des oben erhaltenen Produktes in das Schwefelsäureester erfolgte wie in Beispiel 92 beschrieben. Das Produkt, dessen Hauptanteil der folgenden Formel entsprach, wurde durch Einengen der neutralisierten Lösung erhalten.

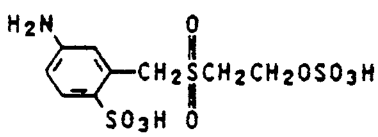

Beispiel 100

301 g 2-Chlor-5-nitrobenzylchlorid und 120 g 2-Mercaptoethanol wurden in 2000 g Ethanol gelöst und bei 25 °C 60 g Kaliumhydroxid, in 1000 Teilen Ethanol gelöst, zugegeben. Man rührte 2 Stunden bei 35 °C, filtrierte die warme Lösung und erhielt nach 1 Stunden Rühren bei 0 - 5 °C eine kristalline Verbindung. Es wurden 351 g analysenreines Produkt der Formel

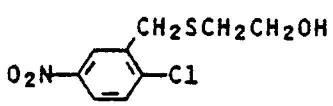

Analyse: theor. Chlor kovalent 14,3 %
gef. Chlor kovalent 14,4 %

erhalten. Schmelzpunkt 65 - 67 °C.

In analoger Weise werden die folgenden Zwischenprodukte erhalten.

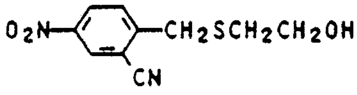
(100 a)
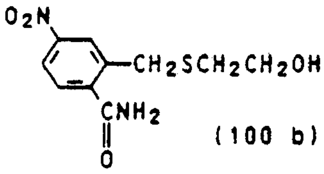
(100 b)
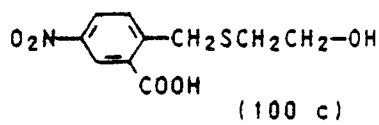
(100 c)

Beispiel 101

50 g der in Beispiel 100 beschriebenen Verbindung wurden katalytisch mit Raney-Nickel in 500 g Methanol bei 50 °C hydriert. Nach Abtrennung des Katalysators und Einengen des Filtrates wurde das kristalline Amin der folgenden der Formel in nahezu quantitativer Ausbeute erhalten.

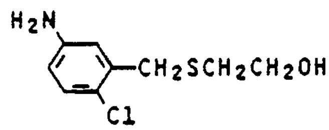

In analoger Weise werden die Verbindungen 100a bis 100 c zu den folgenden Aminen reduziert.

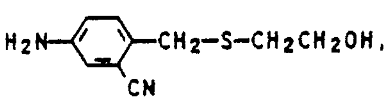
(101 a)
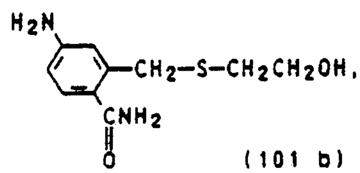
(101 b)
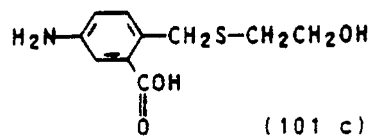
(101 c)

Beispiel 102

37 g der in Beispiel 101 beschriebenen Verbindung wurden in 170 ml Wasser suspendiert und nach Zugabe von 0,5 g Wolframsäure mit 206 g einer 15 %iger Wasserstoffperoxidlösung bei 60 °C oxidiert. Nach Beendigung der exothermen Reaktion wurde eine Stunde bei 80 °C und 12 Stunden bei 20 °C nachgerührt. Das isolierte, kristalline Produkt wurde mit Wasser gewaschen und getrocknet. Man erhielt 40 g einer Verbindung der Formel

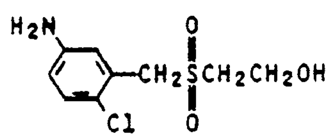

Schmelzpunkt 127 - 128 °C. Das Produkt war mit der in Beispiel 89 beschriebenen Verbindung identisch. Mischschmelzpunkt 127 - 128 °C.

Werden äquimolare Mengen der Produkte 101 a bis 101 c verwendet, so werden identische Produkte wie in Beispiel 90 beschrieben, erhalten.

## Ansprüche

1. Doppelankerreaktivfarbstoffe de Formel I

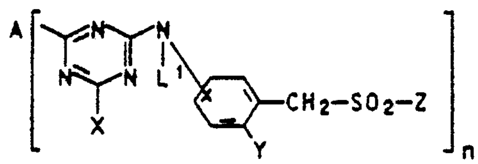

(I),

in der

n 1 oder 2

A den Rest eines gegebenenfalls metallisierten Azofarbstoffs, der eine oder zwei Imino- oder $C_1$-$C_4$-Alkyliminogruppen besitzt, an die der Triazinring gebunden ist,

$L^1$ Wasserstoff oder $C_1$-$C_4$-Alkyl

X Halogen,

Y Wasserstoff, Chlor, Cyano, Carbamoyl, Carboxyl oder Hydroxysulfonyl und

Z Vinyl oder einen Rest der Formel $C_2H_4$-B bedeuten, in dem B für Chlor, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino,

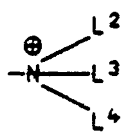 $W^{\ominus}$ , 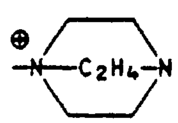 $W^{\ominus}$ , 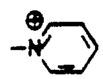 $W^{\ominus}$ oder 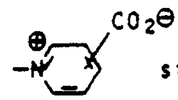 steht,

wobei $L^2$, $L^3$ und $L^4$ gleich oder verschieden sind und jeweils unabhängig voneinander die Bedeutung von $C_1$-$C_4$-Alkyl oder Benzyl und $W^{\ominus}$ jeweils die Bedeutung eines Anions besitzen, mit der Maßgabe, daß Y nicht für Wasserstoff steht, wenn A den Rest eines Disazofarbstoffes bedeutet, der 1-Amino-8-hydroxynaphthalin-3,6- oder -4,6-disulfonsäure als Kupplungskomponente aufweist.

2. Doppelankerreaktivfarbstoffe gemäß Anspurch 1, dadurch gekennzeichnet, daß Y Chlor, Cyano, Carbamoyl, Carboxyl, oder Hydroxysulfonyl und Z den Rest $C_2H_4OSO_3H$ bedeuten.

3. Benzylsulfonylverbindungen der Formel II

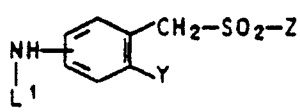

(II),

in der

$L^1$ Wasserstoff oder $C_1$-$C_4$-Alkyl

Y Chlor, Cyano, Carbamoyl, Carboxyl oder Hydroxysulfonyl und

Z Vinyl oder einen Rest der Formel $C_2H_4$-B bedeuten, in dem B für Chlor, $OSO_3H$, $SSO_3H$, $OP(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino,

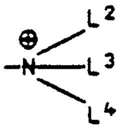 $W^{\ominus}$ , 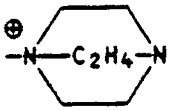 $W^{\ominus}$ , 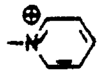 $W^{\ominus}$ oder 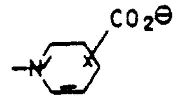 steht,

wobei $L^2$, $L^3$ und $L^4$ gleich oder verschieden sind und jeweils unabhängig voneinander die Bedeutung von $C_1$-$C_4$-Alkyl oder Benzyl und $W^{\ominus}$ jeweils die Bedeutung eines Anions besitzen.

Europäisches Patentamt

# EUROPÄISCHER RECHERCHENBERICHT

Nummer der Anmeldung

EP 88 11 4758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 085 654 (CIBA-GEIGY) * Anspruch 1; Seite 46, Tabelle II, Beispiele 64,65,66 * | 1 | C 09 B 62/04<br>C 09 B 62/503<br>C 07 C 147/12 |
| X | EP-A-0 085 025 (CIBA-GEIGY) * Anspruch 1; Beispiele 103-105 * | 1 | |
| A | FR-A-2 346 418 (CASSELLA) * Anspruch 1 * | 1 | |
| D,A | EP-A-0 065 732 (HOECHST) * Anspruch 1; Beispiele 18-20,128-144 * | 1 | |
| D,A | EP-A-0 048 355 (HOECHST) * Anspruch 1; Beispiele 18-20,128-144 * | 1 | |
| | | | **RECHERCHIERTE SACHGEBIETE (Int. Cl.4)** |
| | | | C 09 B<br>C 07 C |

Der vorliegende Recherchenbericht wurde für alle Patentansprüche erstellt

| Recherchenort | Abschlußdatum der Recherche | Prüfer |
|---|---|---|
| DEN HAAG | 02-11-1988 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)